# EUROPÄISCHE PATENTSCHRIFT

(11) **EP 3 729 069 B1**
(45) Veröffentlichungstag und Bekanntmachung des Hinweises auf die Patenterteilung: **07.06.2023**
(21) Anmeldenummer: 18833651.5
(22) Anmeldetag: 20.12.2018
(51) Int. Cl.: B01L 3/00, G01N 29/04, G01N 29/22

(54) **FLUIDISCHES BAUTEIL SOWIE ULTRASCHALLMESSVORRICHTUNG MIT EINEM SOLCHEN**
FLUIDIC COMPONENT, ULTRASONIC MEASUREMENT DEVICE HAVING A FLUIDIC COMPONENT OF THIS TYPE
COMPOSANT FLUIDIQUE ET DISPOSITIF DE MESURE ULTRASONORE COMPORTANT UN TEL COMPOSANT

(30) Priorität: 20.12.2017 DE 102017130765
(43) Veröffentlichungstag der Anmeldung: 28.10.2020
(73) Patentinhaber: FDX Fluid Dynamix GmbH, 13629 Berlin (DE)
(72) Erfinder: BOBUSCH, Bernhard, 12161 Berlin (DE); KRUEGER, Oliver, 12157 Berlin (DE); WINTERING, Jens Hermann, 10409 Berlin (DE)
(74) Vertreter: Maikowski & Ninnemann Patentanwälte Partnerschaft mbB
(86) Internationale Anmeldenummer: PCT/EP2018/086251
(87) Internationale Veröffentlichungsnummer: WO 2019/122159

(56) Entgegenhaltungen:
- EP-A1- 2 390 632
- DE-U1-202015 104 279
- GB-A- 2 513 413
- US-A- 5 165 438

## Beschreibung

Die Erfindung betrifft eine Ultraschallmessvorrichtung sowie diverse Anwendungen der Ultraschallmessvorrichtung.

Ultraschallmessvorrichtungen (oder auch Ultraschallsensoren, Ultraschallprüfköpfe) können für eine Reihe von Anwendungen eingesetzt werden. In der Medizintechnik werden Ultraschallmessvorrichtungen zur nichtinvasiven Untersuchung von Organen eines menschlichen/tierischen Körpers eingesetzt. Andere Anwendungen sind beispielsweise die zerstörungsfreie Materialprüfung, Abstandsbestimmung oder Ortung von Gegenständen.

Bekannte Ultraschallmessvorrichtungen weisen eine Vorrichtung zur Erzeugung eines Ultraschallsignals (einen Sender), eine Vorrichtung zum Empfangen eines Ultraschallsignals (einen Empfänger) und eine Signalverarbeitungseinheit zur Verarbeitung des empfangenen Ultraschallsignals auf.

Dabei erzeugt die Vorrichtung zur Erzeugung eines Ultraschallsignals Ultraschallpulse. Diese Pulse werden auf einen Körper/Gegenstand gerichtet, wo eine Wechselwirkung der Ultraschallpulse mit dem Körper/Gegenstand erfolgt. Ein Teil der eingeprägten Pulse wird zurückgeworfen und von der Vorrichtung zum Empfangen eines Ultraschallsignals registriert. Mittels der Signalverarbeitungseinheit können auf Basis der empfangenen Pulse Rückschlüsse auf eine Eigenschaft/Beschaffenheit oder die Position des Körpers/Gegenstands gezogen werden.

Zur Erzeugung eines Ultraschallsignals sind aus dem Stand der Technik verschiedene Verfahren und Vorrichtungen bekannt. Bei einem Verfahren wird beispielsweise mittels einer piezoelektrischen Keramik ein gepulstes elektrisches Signal in ein Ultraschallsignal umgewandelt. Ferner ist bekannt, schwingende Membranen oder thermoakustische Wandler zur Erzeugung eines Ultraschallsignals zu verwenden.

Zur Übertragung des Ultraschallsignals von der Vorrichtung zur Erzeugung eines Ultraschallsignals auf den Körper/Gegenstand wird häufig ein festes, gelförmiges oder flüssiges Koppelmittel verwendet. So wird bei der sogenannten Squirtertechnik der Ultraschallpuls über einen Wasserstrahl in den Körper/Gegenstand eingekoppelt. Eine Einkopplung der Ultraschallpulse mittels flüssiger Medien ist aber oft nicht erwünscht, nicht erlaubt oder technisch nicht möglich. Daher sind Ultraschallmessvorrichtungen erwünscht, bei denen die Ultraschallpulse über eine Luftstrecke in den Körper/Gegenstand eingekoppelt (und auch wieder ausgekoppelt) werden können.

Jedoch besteht bei der luftgekoppelten Ultraschallübertragung das Problem, dass bei bekannten Ultraschallprüfköpfen das erzeugte Ultraschallsignal bereits an der Grenzfläche zwischen dem Ultraschallprüfkopf und der umgebenden Luft zum größten Teil reflektiert wird und nur abgeschwächt zu dem zu untersuchenden Körper/Gegenstand gelangt. Nur ein sehr geringer Teil des Ultraschallsignals verlässt somit den Ultraschallprüfkopf und steht der eigentlichen Messung zur Verfügung. Ursache hierfür ist der große Unterschied in der Schallkennimpedanz der Prüfkopfmaterialien und dem Koppelmedium Luft. Daher entstehen beim Passieren der Grenzflächen zwischen den Prüfkopfmaterialien und der umgebenden Luft durch Reflexion hohe Verluste. Bei der luftgekoppelten Ultraschallmessung liegen mindestens vier Grenzflächen vor, die zu überwinden sind: Zunächst einmal für das erzeugte Ultraschallsignal die Grenzfläche zwischen einem Festkörper-Ultraschallanreger (Sender, zum Beispiel einem Piezowandler) des Ultraschallprüfkopfs und der umgebenden Luft, dann zwischen der Luft und dem zu untersuchenden Körper/Gegenstand. Für das reflektierte Ultraschallsignal die Grenzfläche zwischen dem zu untersuchenden Körper/Gestand und der umgebenden Luft und schließlich die Grenzfläche zwischen der umgebenden Luft und einem Messaufnehmer (Empfänger). Dementsprechend ergibt sich für die Messung insgesamt eine starke Signaldämpfung. Unter einer Grenzfläche wird in diesem Zusammenhang der Kontaktbereich zwischen dem Koppelmedium (Luft, Gas oder Gasgemisch) und einem Feststoff verstanden. Dieser Feststoff kann beispielsweise der zu untersuchende Körper/Gegenstand oder der Ultraschallanreger (Sender) oder Messaufnehmer (Empfänger) sein. Die Reflexionen an den Grenzflächen erschweren zudem durch Überlagerungen (Interferenzen) die Auswertung des von dem Körper/Gegenstand zurückgeworfenen Ultraschallsignals. Zudem sind die Winkelauflösung und die Reichweite relativ gering. Daher ist es sehr schwierig, luftgekoppelten Ultraschall praktisch anzuwenden.

Die US Patentschrift US 5 165 438 A beschreibt ein fluidisches Bauteil mit einem Oszillationsmittel umfassend zwei Nebenstromkanäle sowie eine Separationsvorrichtung mit zwei symmetrisch angeordneten Auslassöffnungen.

Der vorliegenden Erfindung liegt die Aufgabe zugrunde, ein Bauteil für eine Ultraschallmessvorrichtung zu schaffen, das eine Übertragung des Ultraschallsignals von der Vorrichtung zur Erzeugung eines Ultraschallsignals auf den zu untersuchenden Körper/Gegenstand über ein gasförmiges Koppelmittel ermöglicht, wobei die zuvor genannten Nachteile jedoch nicht beziehungsweise in deutlich vermindertem Ausmaß auftreten.

Diese Aufgabe wird erfindungsgemäß durch ein fluidisches Bauteil zur Erzeugung eines Ultraschallsignals mit den Merkmalen des Anspruchs 1 gelöst. Ausgestaltungen der Erfindung sind in den Unteransprüchen angegeben.

Danach weist das fluidische Bauteil zur Erzeugung eines Ultraschallsignals eine Strömungskammer auf, die von einem Fluidstrom durchströmbar ist, der durch eine Einlassöffnung der Strömungskammer in die Strömungskammer eintritt und durch eine Auslassöffnung der Strömungskammer aus der Strömungskammer austritt. Dabei weist das fluidische Bauteil mindestens ein Mittel zur Ausbildung einer Oszillation des Fluidstroms an der Auslassöffnung der Strömungskammer auf, wobei die Oszillation in einer Oszillationsebene mit einer Oszillationsfrequenz erfolgt. An der Auslassöffnung der Strömungskammer wird demnach ein Fluidstrom erzeugt, der in der Oszillationsebene mit der Oszillationsfrequenz zwischen zwei maximalen Auslenkungen hin und her schweift, die einen Oszillationswinkel einschließen. Das Mittel zur Ausbildung einer Oszillation kann beispielsweise mindestens ein Nebenstromkanal sein. Alternativ können auch andere Mittel zur Ausbildung einer Oszillation des Fluidstroms vorgesehen sein, wie zum Beispiel Turbulatoren oder kollidierende Fluidstrahlen. Das fluidische Bauteil umfasst insbesondere keine beweglichen Komponenten, die für die Erzeugung des oszillierenden Fluidstroms erforderlich sind. Dadurch weist das fluidische Bauteil keine oder kaum Verschleißerscheinungen auf und ist entsprechend robust.

Das erfindungsgemäß fluidische Bauteil zeichnet sich durch eine Separationsvorrichtung aus, die ausgebildet ist, aus dem oszillierenden Fluidstrom einen Teil abzutrennen, um einen Fluidstrompuls zu erzeugen. Die Separationsvorrichtung weist eine Einlassöffnung auf, durch die der oszillierende Fluidstrom in die Separationsvorrichtung eintritt. Die Separationsvorrichtung weist ferner mindestens eine erste Auslassöffnung und mindestens eine zweite Auslassöffnung auf, durch die jeweils ein Teil des oszillierenden Fluidstroms austritt. Zwischen der mindestens einen ersten Auslassöffnung der Separationsvorrichtung und der mindestens einen zweiten Auslassöffnung der Separationsvorrichtung ist ein Strömungsteiler vorgesehen, der den oszillierenden Fluidstrom wechselseitig in die mindestens eine erste und mindestens eine zweite Auslassöffnung der Separationsvorrichtung lenkt. Die Separationsvorrichtung ist dabei derart ausgebildet, dass der Teil des oszillierenden Fluidstroms, der in die mindestens eine erste Auslassöffnung der Separationsvorrichtung gelenkt wird, und der Teil des oszillierenden Fluidstroms, der in die mindestens eine zweite Auslassöffnung der Separationsvorrichtung gelenkt wird, stromabwärts des Strömungsteilers nicht wieder zusammengeführt wird.

Das heißt, dass die Separationsvorrichtung stromabwärts des Strömungsteilers keine Umlenkvorrichtung (beispielsweise in Form von Kanälen) aufweist, die derart geformt ist, dass sie die Teile des Fluidstroms derart umlenken, dass sie sich stromabwärts des Strömungsteilers innerhalb oder außerhalb der Vorrichtung wieder vereinigen oder aufeinander treffen.

Hierdurch kann erreicht werden, dass durch den Strömungsteiler aus dem Oszillationsprofil des Fluidstroms mindestens zwei (zeitlich und räumlich begrenzte) Teile ausgeschnitten werden, die jeweils als Pulsfolge in die mindestens eine erste und mindestens eine zweite Auslassöffnung der Separationsvorrichtung gelenkt werden, wobei die Pulsfolgen phasenverschoben sind. Durch die Ausgestaltung der Separationsvorrichtung kann zumindest eine der Pulsfolgen aus dem fluidischen Bauteil austreten und als Ultraschallsignal genutzt werden, wobei die Frequenz des Ultraschallsignals unter anderem von der Oszillationsfrequenz des oszillierenden Fluidstroms abhängt. Eine Interferenz mit der anderen Pulsfolge kann vermieden werden.

Insbesondere kann vorgesehen sein, dass die Separationsvorrichtung derart ausgebildet ist, dass der Teil des Fluidstroms, der aus der mindestens einen ersten Auslassöffnung der Separationsvorrichtung austritt, und der Teil des Fluidstroms, der aus der mindestens einen zweiten Auslassöffnung der Separationsvorrichtung austritt, jeweils entlang einer Achse gerichtet ist, wobei die Achsen in Fluidstromrichtung auseinanderlaufen. Somit kann verhindert werden, dass sich die Teile stromabwärts des Strömungsteilers schneiden und interferieren. Um zu vermeiden, dass sich die aus der mindestens einen ersten und mindestens einen zweiten Auslassöffnung der Separationsvorrichtung austretenden Teile des Fluidstroms überlagern, kann vorgesehen sein, dass die Querschnittsflächen der mindestens eine ersten und der mindestens einen zweiten Auslassöffnung der Separationsvorrichtung (jeweils quer zur jeweiligen Fluidstromrichtung) einen Winkel miteinander einschließen, der zwischen 30° und 150° liegt, beispielsweise im Wesentlichen 90° beträgt. Der Ausdruck "quer zu" ist stets als "senkrecht zu" zu verstehen.

Alternativ können die Achsen parallel zueinander sein. Jedoch sollte hier der Abstand zwischen der mindestens einen ersten Auslassöffnung und der mindestens einen zweiten Auslassöffnung der Separationsvorrichtung ausreichend groß gewählt werden, so dass eine Interferenz zwischen den aus diesen Auslassöffnungen austretenden Teilen des Fluidstroms vermieden wird.

Die mindestens eine erste Auslassöffnung und die mindestens eine zweite Auslassöffnung der Separationsvorrichtung können in einer Ebene angeordnet sein, die in der oder parallel zu der Oszillationsebene des aus der Strömungskammer austretenden oszillierenden Fluidstroms ist. Insbesondere können die mindestens eine erste Auslassöffnung und die mindestens eine zweite Auslassöffnung der Separationsvorrichtung derart voneinander beabstandet sein, dass sie abwechselnd von dem hin und her oszillierenden Fluidstrom, der aus der Strömungskammer austritt, durchströmt werden.

Gemäß einer Ausführungsform weisen die mindestens eine erste Auslassöffnung der Separationsvorrichtung und die Einlassöffnung der Separationsvorrichtung jeweils eine Ausdehnung (Breite) in der Oszillationsebene und quer zur Fluidstromrichtung auf, wobei die besagte Ausdehnung (Breite) der mindestens einen ersten Auslassöffnung der Separationsvorrichtung kleiner als oder gleich 150% der besagten Ausdehnung der Einlassöffnung der Separationsvorrichtung ist, vorzugsweise kleiner als oder gleich der besagten Ausdehnung der Einlassöffnung der Separationsvorrichtung, und insbesondere bevorzugt kleiner als oder gleich 75% der besagten Ausdehnung der Einlassöffnung der Separationsvorrichtung.

Durch die genannten Größenverhältnisse der Breiten können zeitlich getrennte Fluidstrompulse erzeugt werden, die eine möglichst kleine Pulsbreite aufweisen. Als Pulsbreite ist hier die Halbwertsbreite, also die Breite eines Pulses auf halber Höhe des Pulses beziehungsweise die Breite auf Höhe des halben Maximums des Pulses, zu verstehen. Die Einlassöffnung der Separationsvorrichtung und die mindestens eine erste Auslassöffnung und die mindestens eine zweite Auslassöffnung der Separationsvorrichtung sind hierbei jeweils an der Stelle der Separationsvorrichtung mit der jeweils kleinsten Querschnittsfläche quer zur Fluidstromrichtung definiert, die der Fluidstrom passiert, wenn er in die Separationsvorrichtung eintritt beziehungsweise aus der Separationsvorrichtung wieder austritt. In diesem Zusammenhang sei erwähnt, dass die Einlassöffnung der Strömungskammer und die Auslassöffnung der Strömungskammer dort definiert sind, wo die Strömungskammer quer zur Strömungsrichtung die kleinsten Querschnittsflächen aufweist, die der Fluidstrom passiert, wenn er in die Strömungskammer eintritt beziehungsweise aus der Strömungskammer wieder austritt.

Das fluidische Bauteil kann somit zeitlich getrennte Fluidstrompulse (mit geringer Impulsbreite) erzeugen, die durch die mindestens eine erste Auslassöffnung der Separationsvorrichtung das fluidische Bauteil verlassen und für eine Ultraschallmessvorrichtung als Ultraschallpulse verwendet werden können. Zur Einstellung der Frequenz der Fluidstrompulse, also des Pulsabstands zwischen aufeinanderfolgenden Fluidstrompulsen, kann beispielsweise die Oszillationsfrequenz des oszillierenden Fluidstroms eingestellt werden. Dabei ist der Pulsabstand der Abstand zwischen dem Maximum eines Fluidstrompulses und dem Maximum des darauffolgenden Fluidstrompulses. Weitere Möglichkeiten der Beeinflussung der Pulsbreite und des Pulsabstandes werden später in der Beschreibung erläutert.

Durch das fluidische Bauteil wird der Ultraschallpuls direkt in dem Fluid erzeugt, das das fluidische Bauteil durchströmt. Das Fluid kann beliebig gewählt werden. So kann es sich beispielsweise um ein gasförmiges Fluid, insbesondere Luft, handeln. Das Fluid kann aber auch ein flüssiges Fluid sein. Wenn das Fluid Luft ist, bedarf das fluidische Bauteil somit keines Koppelmittels, oder anders ausgedrückt, der Ultraschallpuls wird in dem Koppelmittel erzeugt. Wenn das Fluid ein anderes Gas als Luft und das Koppelmittel Luft ist, so ist zumindest der Unterschied in der Schallkennimpedanz zwischen dem Gas und Luft so gering, dass an der Grenzfläche zwischen dem Fluid und dem Koppelmittel keine enorme Reflexion auftritt. Die eingangs erwähnten nachteiligen Folgen der Reflexion werden somit reduziert. Insbesondere steht nun ein großer Teil des erzeugten Ultraschallsignals praktisch zur Verfügung.

Zudem kann auf bewegliche Komponenten zur Erzeugung des oszillierenden Fluidstroms verzichtet werden, so dass hierdurch bedingte Kosten und Aufwendungen nicht anfallen. Zudem ist durch den Verzicht auf bewegliche Komponenten die Vibrations- und Geräuschentwicklung des erfindungsgemäßen fluidischen Bauteils relativ gering.

Erfindungsgemäß weisen die mindestens eine erste Auslassöffnung und die mindestens eine zweite Auslassöffnung der Separationsvorrichtung eine unterschiedlich große Ausdehnung (Breite) in der Oszillationsebene und quer zur Fluidstromrichtung auf. Somit kann beispielsweise für die mindestens eine erste Auslassöffnung der Separationsvorrichtung eine (im Vergleich zu der Einlassöffnung der Separationsvorrichtung) besonders kleine Ausdehnung in der Oszillationsebene und quer zur Fluidstromrichtung gewählt werden, um eine gewünschte Pulsbreite des Fluidstrompulses einzustellen, der aus der mindestens einen ersten Auslassöffnung der Separationsvorrichtung austritt, ohne dass ein unerwünschter Druckanstieg in der Separationsvorrichtung auftritt. So kann die mindestens eine erste Auslassöffnung der Separationsvorrichtung vorgesehen sein, um einen Teil des oszillierenden Fluidstroms als Ultraschallsignal abzugeben, während die mindestens eine zweite Auslassöffnung der Separationsvorrichtung vorgesehen sein kann, um einen Rest des Fluidstroms abzugeben. Dementsprechend kann die mindestens eine erste Auslassöffnung der Separationsvorrichtung entsprechend der gewünschten Fluidstrompulseigenschaften ausgestaltet sein, während die mindestens eine zweite Auslassöffnung der Separationsvorrichtung in einem Rahmen beliebig ausgestaltet sein kann, in dem der Fluidstrompuls, der aus der mindestens einen ersten Auslassöffnung der Separationsvorrichtung austritt, nicht beeinträchtigt wird. So kann insbesondere die Breite (Ausdehnung in der Oszillationsebene und quer zur Fluidstromrichtung) der mindestens einen ersten Auslassöffnung (die das Ultraschallsignal abgibt) um 50% kleiner sein als die Breite der mindestens einen zweiten Auslassöffnung, wobei die Höhe (Ausdehnung quer zur Oszillationsebene) jeweils gleich ist. Bei unterschiedlicher Höhe der mindestens einen ersten und mindestens einen zweiten Auslassöffnung wird die resultierende Querschnittfläche der Auslassöffnungen betrachtet. Vorteilhaft ist, wenn (sowohl bei gleicher als auch bei unterschiedlicher Höhe) die Querschnittsfläche der mindestens einen ersten Auslassöffnung 1/5 (oder weniger) der Querschnittfläche der mindestens einen zweiten Auslassöffnung entspricht, und besonders vorteilhaft ist, wenn die Querschnittsfläche der mindestens einen ersten Auslassöffnung 1/10 (oder weniger) der Querschnittsfläche der mindestens einen zweiten Auslassöffnung entspricht. Die Querschnittsfläche der mindestens einen ersten Auslassöffnung kann sogar nur 1/20 (oder weniger) der Querschnittfläche der mindestens einen zweiten Auslassöffnung entsprechen.

Gemäß einer Ausführungsform kann vorgesehen sein, dass die Separationsvorrichtung stromabwärts der Auslassöffnung der Strömungskammer angeordnet ist. So können die Strömungskammer und die Separationsvorrichtung zwei Einheiten bilden, die zusammen beispielsweise einstückig ausgebildet sein können. Alternativ können die zwei Einheiten aus zwei (oder mehr) Elementen aufgebaut sein. Insbesondere kann die Auslassöffnung der Strömungskammer der Einlassöffnung der Separationsvorrichtung entsprechen. Alternativ kann die Separationsvorrichtung (durch die Auslassöffnung der Strömungskammer) in die Strömungskammer hineinragen.

Zwischen der mindestens einen ersten Auslassöffnung der Separationsvorrichtung und der mindestens einen zweiten Auslassöffnung der Separationsvorrichtung ist ein Strömungsteiler vorgesehen, der den oszillierenden Fluidstrom wechselseitig in die mindestens eine erste und mindestens eine zweite Auslassöffnung der Separationsvorrichtung lenkt. Der Strömungsteiler kann verschiedene Formen aufweisen. So kann der Strömungsteiler eine ebene Wand umfassen. Alternativ kann der Strömungsteiler mindestens eine gekrümmte Wand umfassen, wobei der Querschnitt der mindestens einen gekrümmten Wand in der Oszillationsebene einen gekrümmten Bogen beschreibt, der in Fluidstromrichtung betrachtet nach außen (konkav) gewölbt ist. Durch eine derartige Ausgestaltung des Strömungsteilers kann ein binäres beziehungsweise digitales Strömungsmuster des an der mindestens einen ersten Auslassöffnung der Separationsvorrichtung austretenden Fluids erzielt werden. Um die Ausbildung eines binären beziehungsweise digitalen Strömungsmusters weiter zu unterstützen, kann vorgesehen sein, dass der Strömungsteiler und eine an den Strömungsteiler angrenzende, die mindestens eine erste Auslassöffnung der Separationsvorrichtung begrenzende Wand einen Winkel einschließen, der (in der Oszillationsebene betrachtet) kleiner als 95°, vorzugsweise kleiner als 70°, insbesondere bevorzugt kleiner als 45° ist.

Ferner ist denkbar, dass der Strömungsteiler keilförmig mit zwei (ebenen oder gekrümmten) Flächen und einer Kante ausgebildet ist, wobei sich die Kante und die zwei Flächen in einem Winkel (beispielsweise im Wesentlichen 90°) zu der Oszillationsebene erstrecken und die beiden Flächen in der Oszillationsebene einen Winkel einschließen, der kleiner als 95°, vorzugsweise kleiner als 70°, insbesondere bevorzugt kleiner als 45° ist. Dabei ragt der Keil entgegen der Fluidstromrichtung in die Separationsvorrichtung hinein.

Die Strömungskammer kann eine Ausdehnung senkrecht zur Oszillationsebene aufweisen, die als Tiefe definiert ist. In der Tiefe wird die Strömungskammer von einer Vorderwand und einer der Vorderwand gegenüberliegenden Rückwand begrenzt. Die Vorderwand und die Rückwand können im Wesentlichen parallel ausgerichtet und deckungsgleich sein. Insbesondere kann die Tiefe der Strömungskammer (der Abstand zwischen der Vorderwand und der Rückwand) veränderlich sein. Zu diesem Zweck kann zumindest eine die Strömungskammer in der Tiefe begrenzende Begrenzungswand (Vorderwand und/oder Rückwand) aus einem verformbaren (elastischen) Material gefertigt sein. Durch Aufbringen einer äußeren Kraft auf die Vorderwand und/oder Rückwand von einer Außenseite dieser Wand kann sich diese unter Verringerung der Tiefe der Strömungskammer verformen und dabei (abschnittsweise) in die Strömungskammer hineinbewegen. Auch ist denkbar, dass die Tiefe der Strömungskammer durch stempelartiges Verschieben zumindest einer die Strömungskammer in der Tiefe begrenzende Begrenzungswand (Vorderwand und/oder Rückwand) veränderlich ist. Dementsprechend müssen Begrenzungswände der Strömungskammer, die sich im Wesentlichen senkrecht zu der Oszillationsebene erstrecken, ebenfalls veränderlich sein, beispielsweise teleskopartig ausgebildet sein.

Gemäß einer weiteren Ausführungsform ist die mindestens eine erste Auslassöffnung der Separationsvorrichtung in ihrer Position, Form und/oder Größe veränderlich. Dabei ist festzuhalten, dass die mindestens eine Auslassöffnung der Separationsvorrichtung (ebenso wie die zumindest eine zweite Auslassöffnung der Separationsvorrichtung) als ein Loch in einer Begrenzungswand der Separationsvorrichtung ausgebildet sein kann oder als ein Kanal. Bei letzterer Ausgestaltungsvariante sind Größen der Auslassöffnung dann an der Stelle des Kanals definiert, an der der Kanal senkrecht zur Fluidstromrichtung die kleinste Querschnittsfläche aufweist. Zur Einstellung einer gewünschten Pulsbreite des Fluidstrompulses kann die Ausdehnung (Breite) in der Oszillationsebene und quer zur Fluidstromrichtung der mindestens einen ersten Auslassöffnung verändert werden. Zur Einstellung einer gewünschten Pulsbreite des Fluidstrompulses kann auch die Ausdehnung (Tiefe) senkrecht zu der Oszillationsebene der mindestens einen ersten Auslassöffnung verändert werden. Je kleiner die Breite und Tiefe der mindestens einen ersten Auslassöffnung sind, umso geringer ist die erzielte Pulsbreite des Fluidstrompulses.

Das Mittel zur Ausbildung einer Oszillation umfasst erfindungsgemäß mindestens zwei Nebenstromkanäle, die jeweils über einen Eingang und einen Ausgang mit einem Hauptstromkanal der Strömungskammer fluidisch verbunden sind und die sich jeweils zwischen dem entsprechenden Eingang und dem entsprechenden Ausgang erstrecken. Die mindestens zwei Nebenstromkanäle können (wie auch der Hauptstromkanal) in der Oszillationsebene und damit in einer Ebene liegen. Alternativ kann auch nur einer der mindestens zwei Nebenstromkanäle in der Oszillationsebene liegen. Durch die konkrete Ausgestaltung der mindestens zwei Nebenstromkanäle kann das Oszillationsprofil des erzeugten oszillierenden Fluidstroms beeinflusst werden, beispielsweise durch die Länge der mindestens zwei Nebenstromkanäle. Die Länge des Pfades, den das Fluid zwischen dem Eingang eines Nebenstromkanals und dem Auslassgang dieses Nebenstromkanals durchströmt, entspricht der Länge des Nebenstromkanals. Insbesondere kann vorgesehen sein, dass die mindestens zwei Nebenstromkanäle unterschiedliche Längen aufweisen. Insbesondere kann hierdurch erreicht werden, dass der Fluidstrom, der in der Oszillationsebene zwischen zwei maximalen Auslenkungen oszilliert, länger im Bereich der einen maximalen Auslenkung verweilt als im Bereich der anderen maximalen Auslenkung. Je größer der Unterschied der Längen der mindestens zwei Nebenstromkanäle ist, umso größer fällt der Pulsabstand zwischen zwei aufeinanderfolgenden Fluidstrompulsen aus. So kann ein erster der mindestens zwei Nebenstromkanäle mindestens doppelt so lang sein wie ein zweiter der mindestens zwei Nebenstromkanäle, vorzugsweise mindestens fünf Mal so lang. Jedoch sind auch wesentlich größere Größenunterschiede denkbar, beispielsweise ein Faktor 2000 oder mehr. Dies hängt insbesondere von dem gewünschten Pulsabstand ab.

Um die Länge eines Nebenstromkanals zu erhöhen, ohne dabei den äußeren Bauraum des Nebenstromkanals zu verändern, kann ein mäanderförmiger Verlauf vorgesehen sein, um so die Weglänge für das den Nebenstromkanal durchströmende Fluid zu erhöhen. Eine Alternative zu einem mäanderförmigen Verlauf kann durch zusätzliche Widerstände, Turbulatoren oder Verwirbelungskammern in dem Nebenstromkanal geschaffen werden.

Auch die relative Ausdehnung (Breite) in der Oszillationsebene und quer zur Strömungsrichtung der mindestens zwei Nebenstromkanäle und die relative Ausdehnung (Tiefe) senkrecht zu der Oszillationsebene der mindestens zwei Nebenstromkanäle können wie oben beschrieben das Oszillationsprofil des oszillierende Fluidstroms und damit den Pulsabstand stark beeinflussen. Auch können die Parameter relative Breite, relative Tiefe und relative Länge der mindestens zwei Nebenstromkanäle beliebig kombiniert werden, um das Oszillationsprofil gezielt zu formen.

Die mindestens eine erste Auslassöffnung der Separationsvorrichtung kann vorgesehen sein, um einen Teil des oszillierenden Fluidstroms als Ultraschallsignal abzugeben, das beispielsweise für eine Messung verwendet wird. Demgegenüber kann die mindestens eine zweite Auslassöffnung der Separationsvorrichtung vorgesehen sein, um einen Rest des Fluidstroms abzugeben und aus dem fluidischen Bauteil nach außen abzuleiten, um einen (unerwünschten) Druckaufbau des Fluids in der Separationsvorrichtung und der Strömungskammer zu vermeiden. Um zu vermeiden, dass das aus der mindestens einen zweiten Auslassöffnung der Separationsvorrichtung austretende Fluid die Fluidstrompulse, die aus der mindestens einen ersten Auslassöffnung der Separationsvorrichtung austreten, überlagert und damit eine Messung, für die die Fluidstrompulse der mindestens einen ersten Auslassöffnung verwendet werden, stört, kann vorgesehen sein, dass im Bereich der mindestens einen zweiten Auslassöffnung der Separationsvorrichtung eine Vorrichtung zur Schalldämpfung (zum Beispiel durch aktive oder passive Elemente) vorgesehen ist, die die durch die mindestens eine zweite Auslassöffnung austretenden Fluidstrompulse absorbieren oder abschwächen.

Wie bereits erwähnt, können durch das fluidische Bauteil zeitlich getrennte Fluidstrompulse erzeugt werden. Insbesondere kann das fluidische Bauteil ausgebildet sein, ein Ultraschallsignal zu erzeugen, das Pulse mit einem zeitlichen Pulsabstand zueinander und jeweils einer Halbwertsbreite umfasst, wobei der Pulsabstand größer oder gleich der doppelten Halbwertsbreite, insbesondere größer oder gleich der zehnfachen Halbwertsbreite, insbesondere bevorzugt größer oder gleich der hundertfachen Halbwertsbreite ist. Ein derartiges Ultraschallsignal weist zeitlich eindeutig getrennte Ultraschallpulse auf, die sich für Ultraschallmessverfahren eignen. Grundsätzlich ist ein großer Pulsabstand vorteilhaft. Je höher der Pulsabstand ist, desto tiefer in das zu untersuchende Material hinein kann die Messung erfolgen. Mit dem erfindungsgemäßen fluidischen Bauteil können auch Ultraschallpulse mit einem Pulsabstand erzeugt werden, der größer als die fünftausendfache Pulsbreite ist. Um das gewünschte Verhältnis von Pulsabstand zu Pulsbreite einzustellen, kann die Ausdehnung der mindestens einen ersten Auslassöffnung der Separationsvorrichtung quer zur Fluidstromrichtung (in der Auslassöffnung) und in der Oszillationsebene im Vergleich zu der entsprechenden Ausdehnung der mindestens einen zweiten (dritten) Auslassöffnung der Separationsvorrichtung beziehungsweise die Querschnittsfläche der mindestens einen ersten Auslassöffnung der Separationsvorrichtung im Vergleich zu der Querschnittsfläche der mindestens einen zweiten (dritten) Auslassöffnung der Separationsvorrichtung besonders klein (insbesondere ein Verhältnis von kleiner als 1:1) gewählt werden.

Eine weitere Ausführungsform sieht vor, dass das Mittel zur Ausbildung einer Oszillation des Fluidstroms eine Vorrichtung zur Bereitstellung eines oszillierenden Hilfsfluidstroms und mindestens eine Zuführleitung umfasst, die fluidisch einerseits mit der besagten Vorrichtung und andererseits mit der Strömungskammer des fluidischen Bauteils verbunden ist, um der Strömungskammer den Hilfsfluidstrom zuzuführen. Dabei ist die mindestens eine Zuführleitung derart bezüglich der Strömungskammer angeordnet, dass der Hilfsfluidstrom in einem Winkel ungleich 0° zu dem von der Einlassöffnung zur Auslassöffnung strömenden Fluidstrom in die Strömungskammer eintritt. Da der Hilfsfluidstrom von der besagten Vorrichtung als oszillierender Hilfsfluidstrom bereitgestellt wird, führt die mindestens eine Zuführleitung den Hilfsfluidstrom zeitlich veränderlich der Strömungskammer des fluidischen Bauteils zu. Unter "zeitlich veränderlich" ist hier gemeint, dass zu unterschiedlichen Zeitpunkten die Menge des zugeführten Hilfsfluidstroms unterschiedlich groß ist, da die Zuführleitung nur einen Ausschnitt aus dem oszillierenden Hilfsfluidstrom leitet.

Mit dieser Ausführungsform, die im Prinzip eine Verknüpfung zweier fluidischer Bauteile darstellt, kann die Oszillationsfrequenz eines oszillierenden Fluidstroms von dessen Volumenstrom (Massenstrom) entkoppelt werden. Für Ultraschallmessungen ist ein Ultraschallsignal mit Pulsen wünschenswert, die einerseits zeitlich sauber getrennt sind und eine geringe Pulsbreite aufweisen und andererseits die gleiche Intensität aufweisen, selbst wenn sich der Abstand zwischen aufeinander folgenden Pulsen ändert. Der Pulsabstand ist im Wesentlichen von der Oszillationsfrequenz des oszillierenden Fluidstroms abhängig, aus dem zur Erzeugung eines Pulses mittels der Separationsvorrichtung ein Teil herausgetrennt wird. Die Intensität eines Pulses ist vom Volumenstrom beziehungsweise vom Eingangsdruck abhängig. (Mit dem Eingangsdruck beziehungsweise mit dem Volumenstrom kann die Strömungsgeschwindigkeit innerhalb des Bauteils beeinflusst werden.) Wenn der Pulsabstand geändert werden soll, kann eine Änderung der Oszillationsfrequenz herbeigeführt werden. Diese zieht jedoch üblicherweise eine Änderung des Volumenstroms und somit auch eine Änderung der Signalintensität nach sich. Diese Ausführungsform ist geeignet, durch Verknüpfung zweier fluidischer Bauteile die Oszillationsfrequenz eines oszillierenden Fluidstroms von dessen Volumenstrom (Massenstrom) zu entkoppeln, indem das eine fluidische Bauteil den Volumenstrom (Massenstrom) und das andere fluidische Bauteil (später als das zweite fluidische Bauteil bezeichnet) die Oszillationsfrequenz bestimmt. Somit können Pulsabstand und Signalintensität entkoppelt werden.

Es ist denkbar, dass die Vorrichtung zur Bereitstellung eines Hilfsfluidstroms ein zweites fluidisches Bauteil umfasst, das eine Strömungskammer umfasst, die von dem Hilfsfluidstrom durchströmbar ist, der durch eine Einlassöffnung der Strömungskammer in die Strömungskammer eintritt und durch eine Auslassöffnung der Strömungskammer aus der Strömungskammer austritt. Dabei kann das zweite fluidische Bauteil derart ausgebildet sein, dass es mindestens ein Mittel zur Ausbildung einer Oszillation des Hilfsfluidstroms an der Auslassöffnung (der Strömungskammer des zweiten fluidischen Bauteils) aufweist, wobei die Oszillation beispielsweise in einer Oszillationsebene erfolgen kann. Insbesondere kann das mindestens eine Mittel zur Ausbildung einer Oszillation des Hilfsfluidstroms einen Nebenstromkanal umfassen, der über einen Eingang und einen Ausgang mit einem Hauptstromkanal der Strömungskammer (des zweiten fluidischen Bauteils) fluidisch verbunden ist und sich zwischen dem Eingang und dem Ausgang erstreckt. Das zweite fluidische Bauteil kann somit einen in einer Oszillationsebene oszillierenden Hilfsfluidstrom bereitstellen, welcher der Strömungskammer des fluidischen Bauteils über die mindestens eine Zuführleitung zugeführt wird.

Um die Oszillationsbewegung effizienter ausnutzen zu können, kann das Mittel zur Ausbildung einer Oszillation des Fluidstroms zwei Zuführleitungen umfassen, die auf gegenüberliegenden Seiten der Strömungskammer des fluidischen Bauteils jeweils fluidisch mit der Strömungskammer verbunden sind. Somit kann der Hilfsfluidstrom von einander gegenüberliegenden Seiten in die Strömungskammer des fluidischen Bauteils geleitet werden und auf den dort von der Einlassöffnung zur Auslassöffnung strömenden Fluidstrom einwirken und ihn von einer im Wesentlichen geradlinigen Fluidstromrichtung seitlich (abwechselnd in entgegengesetzte Richtungen) ablenken.

Um den aus der Vorrichtung zur Bereitstellung eines Hilfsfluidstroms (insbesondere aus dem zweiten fluidischen Bauteil) austretenden oszillierenden Hilfsfluidstrom wechselseitig in die zwei Zuführleitungen zu lenken, kann stromabwärts dieser Vorrichtung ein zweiter Strömungsteiler (als Teil des Mittels zur Ausbildung einer Oszillation des Fluidstroms) vorgesehen sein. Dabei ist der zweite Strömungsteiler insbesondere derart ausgebildet und bezüglich der Vorrichtung zur Bereitstellung eines Hilfsfluidstroms angeordnet, dass der zweite Strömungsteiler zu unterschiedlichen Zeiten aus dem oszillierenden Fluidstrom jeweils einen Teil heraustrennt. Hierzu weist der zweite Strömungsteiler insbesondere ein Verzweigungselement auf, das zwei Zweige bildet, wobei die zwei Zweige vorzugsweise in der Oszillationsebene des Hilfsfluidstroms angeordnet und fluidisch jeweils mit einer der zwei Zuführleitungen verbunden sind. Somit werden die zwei Zuführleitungen zeitlich versetzt von dem Hilfsfluidstrom durchströmt. Demzufolge wirkt der Teil des Hilfsfluidstroms, der von der einen Seite in die Strömungskammer des fluidischen Bauteils strömt, zu einem anderen Zeitpunkt auf den in der Strömungskammer des fluidischen Bauteils strömenden Fluidstrom ein als der Teil des Hilfsfluidstroms, der von der gegenüberliegenden Seite in die Strömungskammer des fluidischen Bauteils strömt. Somit kann der Fluidstrom abwechselnd von dem einen beziehungsweise dem anderen Teil des Hilfsfluidstroms abgelenkt und zu einer Oszillation (in einer Ebene) angeregt werden. Das fluidische Bauteil kann in dieser Ausführungsform auch als bistabiler Wandhaftungsverstärker bezeichnet werden.

Der Pulsabstand der aus der Separationsvorrichtung austretenden Fluidstrompulse kann durch die Geometrie des Mittels zur Ausbildung einer Oszillation des Fluidstroms, durch die Form des Strömungsteilers der Separationsvorrichtung und durch die relative Querschnittsgröße der relevanten Auslassöffnung der Separationsvorrichtung beeinflusst werden, und die Pulsbreite zusätzlich durch die Form des fluidischen Bauteils selbst. Die relevante Auslassöffnung ist die Auslassöffnung der Separationsvorrichtung, durch die der Teil des Fluidstroms strömt, der als Nutzsignal dienen soll. Durch den Eingangsdruck an der Einlassöffnung des fluidischen Bauteils kann im Wesentlichen die Pulsintensität beeinflusst werden.

Die Pulsbreite und die Intensität des Nutzsignals, das aus der mindestens einen ersten Auslassöffnung der Separationsvorrichtung austritt, können durch die sogenannte Schaltzeit des Fluidstroms in der Strömungskammer des fluidischen Bauteils beeinflusst werden. Als Schaltzeit ist die Zeitdauer zu verstehen, die der Fluidstrom benötigt, um von der einen Seitenwand der Strömungskammer, in der eine Öffnung vorgesehen ist, über die die Strömungskammer mit einer Zuführleitung fluidisch verbunden ist, zu der gegenüberliegenden Seitenwand zu gelangen, die ebenfalls eine solche Öffnung aufweisen kann. Die Schaltzeit kann im Bereich unter 10 ms liegen, um eine möglichst kleine Pulsbreite unterhalb von 100 µs zu erhalten. Für die Ultraschallprüfung von Beton ist eine Pulsbreite insbesondere im Bereich zwischen 50 µs und 5 µs interessant.

Wie bereits erwähnt, bestimmt die Oszillationsfrequenz des aus dem fluidischen Bauteil austretenden Fluidstroms insbesondere den Pulsabstand. Diese Oszillationsfrequenz wird von der Oszillationsfrequenz des Hilfsfluidstroms des zweiten fluidischen Bauteils vorgegeben. Der gewünschte Pulsabstand und damit die erforderliche Oszillationsfrequenz können variieren. Maßgeblich ist insbesondere die Geschwindigkeit der verwendeten Messtechnik. So muss bei der Ultraschallprüfung von Beton der Pulsabstand größer sein, als die Zeit, die der Puls vom Anregungssystem bis zum Empfängersystem durch das zu prüfende Bauteil braucht. Der Pulsabstand beträgt erfahrungsgemäß mindestens 250 µs und bis zu 10 ms. Wenn mittels der Separationsvorrichtung aus dem oszillierenden Fluidstrom, der aus dem fluidischen Bauteil austritt, ungefähr mittig zwischen den maximalen Auslenkungen des oszillierenden Fluidstroms ein Teil zur Erzeugung der Pulse herausgetrennt wird, so kann das fluidische Bauteil mit einer Oszillationsfrequenz von 50 Hz bis 2000 Hz betrieben werden. Besonders bevorzugt ist eine Oszillationsfrequenz des fluidischen Bauteils zwischen 100 Hz und 1200 Hz (entspricht einem Pulsabstand von circa 416 µs bis 5 ms).

Gemäß einer weiteren Ausführungsform umfasst die stromabwärts der Auslassöffnung des fluidischen Bauteils vorgesehene Separationsvorrichtung mindestens eine erste Auslassöffnung, mindestens eine zweite Auslassöffnung und mindestens eine dritte Auslassöffnung, durch die jeweils ein Teil des oszillierenden Fluidstroms austritt. Dabei ist zwischen der mindestens einen ersten Auslassöffnung der Separationsvorrichtung, der mindestens einen zweiten Auslassöffnung der Separationsvorrichtung und der mindestens einen dritten Auslassöffnung der Separationsvorrichtung ein Strömungsteiler vorgesehen, der den oszillierenden Fluidstrom wechselseitig in die mindestens eine erste, zweite und dritte Auslassöffnung der Separationsvorrichtung lenkt. Vorzugsweise liegt dabei eine (die erste) der Auslassöffnungen der Separationsvorrichtung auf einer Achse, die sich im Wesentlichen mittig zwischen den maximalen Auslenkungen des oszillierenden Fluidstroms erstreckt. Somit nimmt diese eine (erste) Auslassöffnung den Teil des oszillierenden Fluidstroms auf, der mittig zwischen den maximalen Auslenkungen des oszillierenden Fluidstroms liegt. Somit ist der zeitliche Abstand der Zeitpunkte, zu denen ein Teil des oszillierenden Fluidstroms in diese eine (erste) Auslassöffnung strömt (und damit der Pulsabstand), im Wesentlichen stets gleich groß. Dabei weist diese eine (erste) Auslassöffnung vorzugsweise eine kleinere Querschnittsfläche auf als die übrigen Auslassöffnungen der Separationsvorrichtung. Beispielsweise kann diese eine (erste) Auslassöffnung der Separationsvorrichtung auf einer Achse liegen, die die Einlassöffnung und die Auslassöffnung des fluidischen Bauteils miteinander verbindet. Jedoch kann diese eine (erste) Auslassöffnung der Separationsvorrichtung auch außerhalb dieser Achse liegen. Für Anwendungen, bei denen ein konstanter Pulsabstand nicht nötig ist, kann diese eine (erste) Auslassöffnung auf einer Achse liegen, die sich insofern beliebig (außerhalb der Mittelposition) zwischen den maximalen Auslenkungen des oszillierenden Fluidstroms erstreckt, dass der Fluidstrom in diese eine (erste) Auslassöffnung strömen kann. Dabei können sich die Achse, die die Einlassöffnung und die Auslassöffnung des fluidischen Bauteils miteinander verbindet, und die Achse, auf der diese eine (erste) Auslassöffnung liegt, in einem Punkt schneiden, der sich stromaufwärts dieser einen (ersten) Auslassöffnung befindet. In diesem Fall weist die Pulsfolge zwei unterschiedlich große, alternierende Pulsabstände auf.

Die Erfindung betrifft ferner eine Vorrichtung zur Erzeugung eines Ultraschallsignals. Diese Vorrichtung umfasst einerseits eine Fluidstromquelle zur Bereitstellung eines Fluidstroms und andererseits ein erfindungsgemäßes fluidisches Bauteil zur Erzeugung eines Ultraschallsignals. Dabei ist die Fluidstromquelle fluidisch mit der Einlassöffnung der Strömungskammer des fluidischen Bauteils verbunden und liefert den das fluidische Bauteil durchströmenden Fluidstrom. Ferner kann sie eine Hilfsfluidstromquelle zur Bereitstellung des Hilfsfluidstroms umfassen, die mit der Einlassöffnung der Strömungskammer der Vorrichtung zur Bereitstellung eines Hilfsfluidstroms fluidisch verbunden ist. Die Verbindung zwischen der Fluidstromquelle (Hilfsfluidstromquelle) und dem fluidischen Bauteil (Vorrichtung zur Bereitstellung eines Hilfsfluidstroms) kann lösbar ausgestaltet sein. Die Fluidstromquelle (Hilfsfluidstromquelle) kann einen Fluidstrom (Hilfsfluidstrom) mit einem Überdruck (gegenüber dem Umgebungsdruck) von beispielsweise 0,025 bar bereitstellen. Die Fluidstromquelle (Hilfsfluidstromquelle) kann insbesondere ein (steuerbares) Ventil oder eine andere Regeleinrichtung umfassen, um einen Druck des aus der Fluidstromquelle (Hilfsfluidstromquelle) austretenden Fluidstroms (Hilfsfluidstroms) einzustellen. Durch Änderung des Eingangsdrucks kann die Frequenz des erzeugten Fluidstrompulses angepasst werden.

Die Fluidstromquelle kann insbesondere eine Gasstromquelle sein, die dem fluidischen Bauteil ein Gas als Fluid bereitstellt. Hierdurch kann das durch das fluidische Bauteil erzeugte Ultraschallsignal in dem Gas erzeugt werden und ohne massive Verluste durch Reflexion an der Grenzfläche zwischen der Vorrichtung zur Erzeugung eines Ultraschallsignals und der umgebenden Luft über eine Luftstrecke in einen Körper/Gegenstand eingekoppelt werden.

Die Fluidstromquellen können vielfältig und abhängig von der konkreten Anwendung verschieden sein. Es kann sich um ein Druckreservoir handeln, in dem das Fluid mit einem Druck vorrätig ist, der über dem Umgebungsdruck liegt. Das Druckreservoir kann mobil sein, beispielsweise eine Druckgasflasche oder Druckluftflasche. Alternativ kann die Fluidstromquelle einen elektrisch oder mechanisch betriebenen Verdichter umfassen, wie zum Beispiel einen Membrankompressor, Schrauben- oder Zahnradkompressor. Es ist auch denkbar, dass ein (im Vergleich zum Umgebungsdruck) Überdruck aus einem Subsystem einer Gesamtmaschine, zum Beispiel eines Fahrzeugs abgezweigt wird.

Die Erfindung betrifft auch eine Ultraschallmessvorrichtung mit einer Vorrichtung zur Erzeugung eines Ultraschallsignals, einer Vorrichtung zum Empfangen eines Ultraschallsignals, und einer Signalverarbeitungseinheit zur Verarbeitung des empfangenen Ultraschallsignals. Dabei umfasst die Vorrichtung zur Erzeugung eines Ultraschallsignals ein erfindungsgemäßes fluidisches Bauteil.

Die Ultraschallmessvorrichtung kann mit einem Gas als Fluid betrieben werden. Somit kann das Ausmaß der Reflexion des erzeugten Ultraschallsignals an der Grenzfläche der Ultraschallmessvorrichtung und der umgebenden Luft deutlich verringert werden. Die eingangs erwähnten nachteiligen Folgen der Reflexion werden somit reduziert. Insbesondere steht nun ein großer Teil des erzeugten Ultraschallsignals einer Messung praktisch zur Verfügung. Durch eine höhere Intensität des Ultraschallsignals, das die Ultraschallmessvorrichtung verlässt, kann eine höhere Messgenauigkeit erreicht werden. Auch können größere Reichweiten abgedeckt werden. Die erhöhte Messgenauigkeit und die Reichweite können beispielsweise bei autonomen Fahrzeugsystemen Anwendung finden, zur Erfassung der Umgebung beim Einparken oder während der Fahrt mit mitunter hohen Fahrgeschwindigkeiten.

Das erfindungsgemäße fluidische Bauteil ermöglicht somit eine luftgekoppelte Übertragung des Ultraschallpulses auf den Körper/Gegenstand. Dies bedeutet praktisch, dass das Ultraschallmessgerät, das ein solches fluidisches Bauteil umfasst, den Körper/Gegenstand nicht zu berühren braucht. In der Medizintechnik und Materialprüfung können Untersuchungen also aus einer gewissen Ferne erfolgen. Insbesondere in der Medizintechnik kann dies für hygienische Aspekte von Vorteil sein.

Gemäß einer Ausführungsform ist die Vorrichtung zum Empfangen eines Ultraschallsignals ausgebildet, ein von der Vorrichtung zur Erzeugung eines Ultraschallsignals ausgesandtes und außerhalb der Ultraschallmessvorrichtung reflektiertes Ultraschallsignal und ein Referenzsignal zu empfangen, wobei das Referenzsignal durch den aus der mindestens einen zweiten Auslassöffnung der Separationsvorrichtung austretenden Teil des Fluidstroms bereitgestellt wird. Das Referenzsignal kann als Triggersignal für die Signalverarbeitungseinheit dienen. Zu diesem Zweck kann die Ultraschallmessvorrichtung eine Einrichtung aufweisen, die eingerichtet und ausgebildet ist, den aus der mindestens einen zweiten Auslassöffnung der Separationsvorrichtung austretenden Teil des Fluidstroms beziehungsweise einen Teil dieses Teils auf die Vorrichtung zum Empfangen eines Ultraschallsignals zu lenken.

Die erfindungsgemäße Ultraschallmessvorrichtung kann für eine Reihe von Verfahren dienen, wobei die Ultraschallmessvorrichtung zur Erzeugung eines Ultraschallsignals ein erfindungsgemäßes fluidisches Bauteil umfasst. Bei den Verfahren handelt es sich um ein Verfahren zur berührungslosen Untersuchung eines Gegenstands oder eines Körpers mittels der Ultraschallmessvorrichtung und ein Verfahren zur Bestimmung eines Abstands eines Gegenstands zu einem oder mehreren weiteren Gegenständen mittels der Ultraschallmessvorrichtung. Das Verfahren zur berührungslosen Untersuchung eines Gegenstands oder eines Körpers umfasst Verfahren in der Materialprüfung zur Überprüfung von Materialeigenschaften eines Körpers, Verfahren in der Medizintechnik zur nichtinvasiven Untersuchung eines Körpers und Verfahren in der Sicherheitstechnik (die beispielsweise an Flughäfen zum Einsatz kommen können) zur Kontrolle von Menschen und Gegenständen. Die erfindungsgemäße Vorrichtung zur Erzeugung eines Ultraschallsignals kann auch für ein Verfahren zur berührungslosen Reinigung eines Gegenstands dienen, wobei die Vorrichtung zur Erzeugung eines Ultraschallsignals ein erfindungsgemäßes fluidisches Bauteil umfasst.

Die Erfindung wird nachfolgend anhand von Ausführungsbeispielen in Verbindung mit den Zeichnungen näher erläutert werden.

Es zeigen:
- Fig. 1: eine schematische Darstellung einer Ultraschallmessvorrichtung gemäß einer Ausführungsform der Erfindung und eines zu untersuchenden Gegenstandes;
- Fig. 2: eine Schnittdarstellung durch ein fluidisches Bauteil gemäß einer Ausführungsform der Erfindung;
- Fig. 3: eine Schnittdarstellung durch das fluidische Bauteil aus Figur 2 entlang der Linie A'-A";
- Fig. 4: eine Schnittdarstellung durch eine Strömungskammer eines fluidischen Bauteils gemäß einer weiteren Ausführungsform der Erfindung;
- Fig. 5: eine Schnittdarstellung durch ein fluidisches Bauteil gemäß einer weiteren Ausführungsform der Erfindung;
- Fig. 6: eine Schnittdarstellung durch ein fluidisches Bauteil gemäß einer weiteren Ausführungsform der Erfindung;
- Fig. 7: eine Schnittdarstellung durch ein fluidisches Bauteil gemäß einer weiteren Ausführungsform der Erfindung;
- Fig. 8: eine Schnittdarstellung durch ein fluidisches Bauteil gemäß einer weiteren Ausführungsform der Erfindung;
- Fig. 9: eine Schnittdarstellung durch ein fluidisches Bauteil gemäß einer weiteren Ausführungsform der Erfindung;
- Fig. 10: eine Schnittdarstellung durch ein fluidisches Bauteil gemäß einer weiteren Ausführungsform der Erfindung; und
- Fig. 11: eine Schnittdarstellung durch ein fluidisches Bauteil gemäß einer weiteren Ausführungsform der Erfindung.

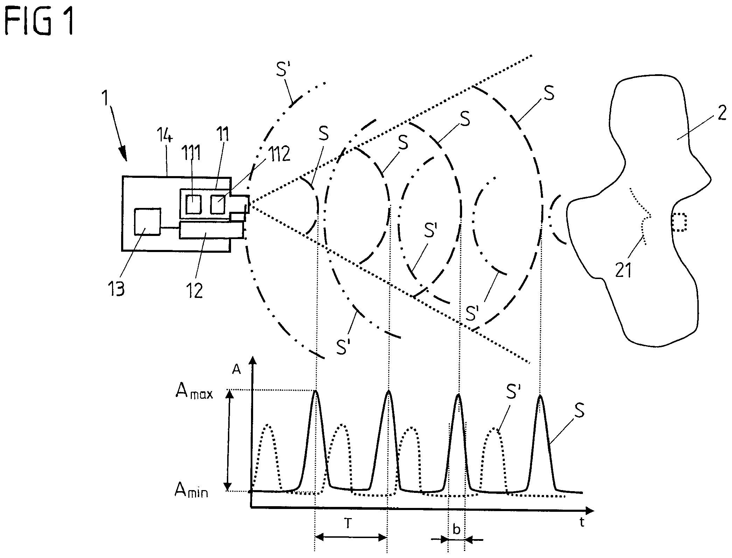

In Figur 1 ist schematisch eine Ultraschallmessvorrichtung 1 und ein zu untersuchender Gegenstand 2 dargestellt. Mit der Ultraschallmessvorrichtung 1 kann einerseits die Position des Gegenstands 2 im Raum ermittelt und andererseits der Zustand (beispielsweise bezüglich Störstellen 21) des Gegenstands 2 untersucht werden. Figur 1 veranschaulicht auch ein Verfahren zur berührungslosen Untersuchung eines Gegenstands (oder eines Körpers) 2 mittels einer Ultraschallmessvorrichtung 1, sowie ein Verfahren zur Bestimmung eines Abstands eines ersten Gegenstands zu einem weiteren Gegenstand 2 mittels der Ultraschallmessvorrichtung 1. Bei letzterem Verfahren ist der Abstand der Ultraschallmessvorrichtung 1 zu dem ersten Gegenstand bekannt, beispielsweise da die Ultraschallmessvorrichtung 1 an dem ersten Gegenstand angeordnet ist.

Die Ultraschallmessvorrichtung 1 umfasst eine Vorrichtung 11 zur Erzeugung eines Ultraschallsignals S (Sender), eine Vorrichtung 12 zum Empfangen eines Ultraschallsignals S' (Empfänger) und eine Signalverarbeitungseinheit 13 zur Verarbeitung des empfangenen Ultraschallsignals S'. Das erzeugte Ultraschallsignal S ist durch eine Strichlinie und das zu empfangende Ultraschallsignal S' durch eine Punktstrichlinie dargestellt. Die Ultraschallmessvorrichtung 1 ist derart bezüglich des Gegenstands 2 ausgerichtet, dass das von dem Sender 11 erzeugte Ultraschallsignal S auf den Gegenstand 2 gerichtet ist. Das zu empfangende Ultraschallsignal S' ist der Teil des erzeugten Ultraschallsignals S, der von dem Gegenstand 2 zurückgeworfen (reflektiert) wird. In der Ausführungsform aus Figur 1 sind der Sender 11, der Empfänger 12 sowie die Signalverarbeitungseinheit 13 in einem Gehäuse 14 untergebracht. Das Gehäuse 14 weist entsprechende Öffnungen auf, um das von der Vorrichtung 11 zur Erzeugung eines Ultraschallsignals S erzeugte Ultraschallsignal S an die Umgebung abzugeben und um den Empfänger 12 für ein zu empfangendes (reflektiertes) Ultraschallsignal S' freizugeben.

Gemäß einer anderen Ausführungsform kann sich der Empfänger 12 außerhalb des Gehäuses 14 befinden. Zum Beispiel kann der Empfänger 12 in der Nähe oder direkt an dem zu prüfenden Gegenstand 2 angeordnet sein. Eine beispielhafte Position ist in Figur 1 durch ein gepunktetes Kästchen dargestellt. Auch können mehrere Empfänger 12 vorgesehen sein, die räumlich verteilt sind, um verschiedene Reflexionen empfangen zu können.

Im unteren Teil der Figur 1 ist ferner die Amplitude A des erzeugten Ultraschallsignals S als Funktion über die Zeit t dargestellt. Diese Funktion kann als Auslenkung des Schalles oder des Schalldruckes interpretiert werden. Die Differenz zwischen der maximalen Amplitude Aₘₐₓ und der minimalen Amplitude Aₘᵢₙ entspricht der Intensität des Ultraschallsignals S. Das Ultraschallsignal S umfasst Pulse, die eine Pulsbreite b aufweisen und zeitlich getrennt sind. Die Pulsbreite b ist dabei die Halbwertsbreite der Pulse. Der zeitliche Abstand zwischen der maximalen Amplitude Aₘₐₓ eines Pulses und der maximalen Amplitude Aₘₐₓ des darauf folgenden Pulses wird als Pulsabstand T bezeichnet. Ferner ist die Amplitude des von dem Gegenstand 2 reflektierten Ultraschallsignals S' als Funktion über die Zeit t dargestellt. Das reflektierte Ultraschallsignal S' ist gegenüber dem erzeugten Ultraschallsignal S zeitlich versetzt und weist im Vergleich eine vergrößerte Halbwertsbreite b auf.

Zur Erzeugung der zeitlich getrennten Ultraschallpulse dient die Vorrichtung 11 zur Erzeugung eines Ultraschallsignals S, welche eine Fluidstromquelle 111 und ein fluidisches Bauteil 112 umfasst, die fluidisch miteinander verbunden sind. Das Ultraschallsignal S wird direkt in dem Fluid erzeugt, das von der Fluidstromquelle 111 bereitgestellt wird und das das fluidische Bauteil 112 durchströmt. Das Ultraschallsignal ist eine Folge von Fluidstrompulsen. Die Fluidstromquelle 111 ist hier eine Druckgasquelle, insbesondere eine Druckluftquelle. In der Ausführungsform aus Figur 1 ist die Fluidstromquelle 111 im Gehäuse 14 der Ultraschallmessvorrichtung 1 angeordnet. Alternativ kann die Fluidstromquelle 111 außerhalb des Gehäuses 14 der Ultraschallmessvorrichtung 1 angeordnet sein. Auch kann die Fluidstromquelle 111 lösbar mit dem fluidischen Bauteil 112 verbunden sein. Das fluidische Bauteil 112 ist geeignet, aufeinanderfolgende Ultraschallpulse mit einem Pulsabstand T zu erzeugen, der mindestens der doppelten Pulsbreite b entspricht, vorzugsweise mindestens der zehnfachen Pulsbreite b und besonders bevorzugt mindestens der hundertfachen Pulsbreite b. Für eine möglichst hohe Auflösung bei der Ultraschallmessung ist eine geringe Pulsbreite b notwendig. Mit dem fluidischen Bauteil 112 kann gezielt eine kleine Pulsbreite b für das gewünschte Anwendungsfeld eingestellt werden.

Das fluidische Bauteil 112 ist geeignet, eine Fluidstrompulsfolge mit einer Frequenz von über 1 kHz zu erzeugen. Für die Bestimmung der Lage eines Gegenstands im Raum (das heißt bezüglich mindestens eines weiteren Gegenstands) ist ein Frequenzbereich von über 40 kHz bis zu 200 kHz geeignet. Für die zerstörungsfreie Materialprüfung eines Gegenstands ist eine Frequenz von über 20 kHz bis zu 100 MHz geeignet. Zur nichtinvasiven Untersuchung in der Medizintechnik werden Frequenzen von 200 kHz bis zu über 1 MHz eingesetzt. Mit den genannten Frequenzen sind in diesem Fall die Kehrwerte der Pulsbreiten b gemeint. Hierbei bedeutet beispielsweise eine Frequenz von über 20 kHz eine Pulsbreite b von weniger als 1/20.000 s.

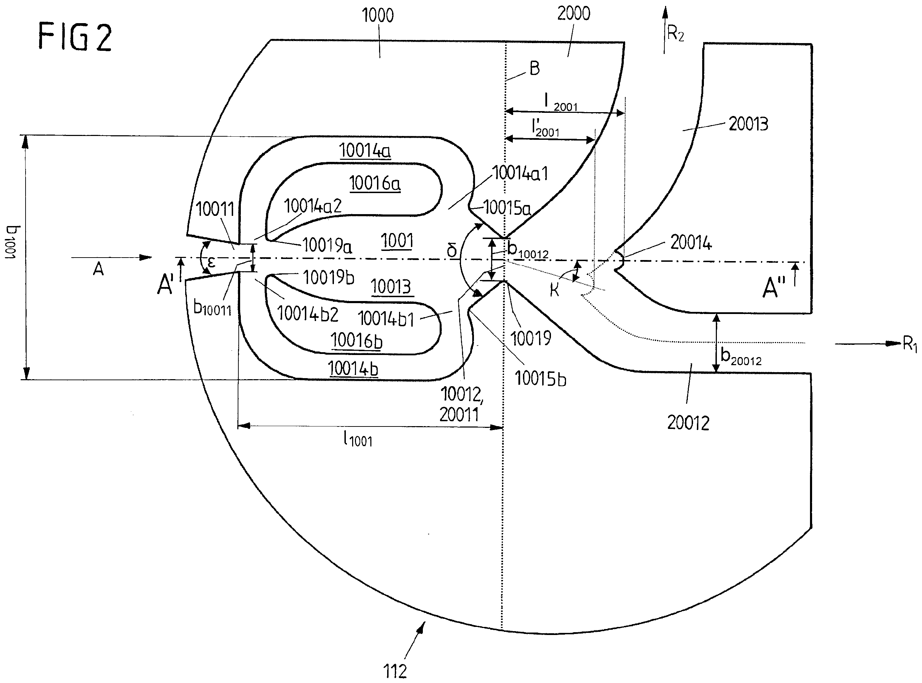

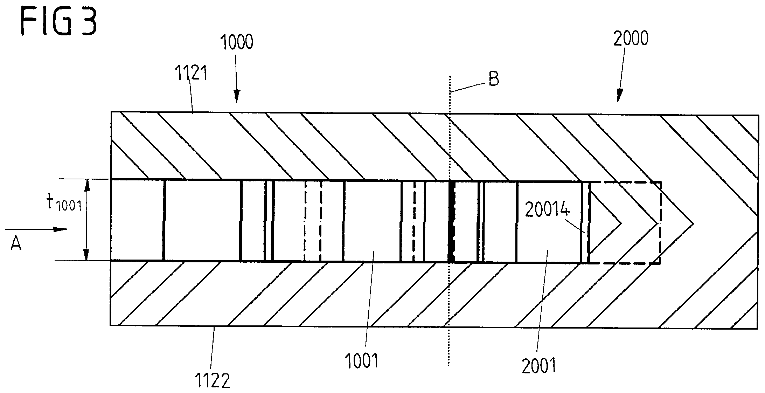

In den Figuren 2 und 3 ist eine Ausführungsform eines erfindungsgemäßen fluidischen Bauteils 112 dargestellt. Dabei ist Figur 2 eine Schnittdarstellung durch das fluidische Bauteil 112 parallel zur Oszillationsebene des fluidischen Bauteils 112. Figur 3 zeigt eine Schnittdarstellung durch das fluidische Bauteil aus Figur 2 senkrecht zur Oszillationsebene entlang der Linie A'-A".

Das fluidische Bauteil 112 umfasst zwei Teilsysteme 1000 und 2000, die in Fluidstromrichtung nacheinander angeordnet und fluidisch miteinander verbunden sind. Die Teilsysteme 1000 und 2000 können einstückig oder als individuelle Elemente ausgebildet sein. Die Teilsysteme 1000 und 2000 sind in den Figuren 2 und 3 durch eine als gepunktete Linie B dargestellte Ebene gedanklich voneinander getrennt. Das erste Teilsystem 1000 erzeugt einen in einer Oszillationsebene oszillierenden Fluidstrom, und das zweite Teilsystem 2000 ist ausgebildet und vorgesehen, aus dem oszillierenden Fluidstrom, der von dem ersten Teilsystem 1000 erzeugt wird, einen Teil abzutrennen, um aus dem oszillierenden Fluidstrom zeitlich getrennte Fluidstrompulse einer definierten Pulsbreite b und mit einem definierten Pulsabstand T zu erzeugen.

Das erste Teilsystem 1000 des fluidischen Bauteils 112 umfasst eine Strömungskammer 1001, die von einem Fluidstrom durchströmbar ist. Der Fluidstrom wird, wie bereits erwähnt, von der Fluidstromquelle 111 bereitgestellt. Die Strömungskammer 1001 ist auch als Wechselwirkungskammer bekannt.

Die Strömungskammer 1001 umfasst eine Einlassöffnung 10011, über die der Fluidstrom in die Strömungskammer 1001 eintritt, und eine Auslassöffnung 10012, über die der Fluidstrom aus der Strömungskammer 1001 austritt. Die Einlassöffnung 10011 und die Auslassöffnung 10012 sind auf zwei sich (strömungstechnisch) gegenüberliegenden Seiten des fluidischen Bauteils 1001 zwischen einer Vorderwand 1121 und einer Rückwand 1122 angeordnet. Die Vorderwand 1121 und die Rückwand 1122 sind im Wesentlichen parallel zueinander und zu der Oszillationsebene ausgerichtet. Der Fluidstrom bewegt sich in der Strömungskammer 1001 im Wesentlichen entlang einer Längsachse A des Teilsystems 1000 des fluidischen Bauteils 112 (die die Einlassöffnung 10011 und die Auslassöffnung 10012 miteinander verbindet) von der Einlassöffnung 10011 zu der Auslassöffnung 10012. Dabei sind die Einlassöffnung 10011 und die Auslassöffnung 10012 dort definiert, wo die Strömungskammer 1001 quer zur Strömungsrichtung die kleinsten Querschnittsflächen aufweist, die der Fluidstrom passiert, wenn er in die Strömungskammer 1001 eintritt beziehungsweise aus der Strömungskammer 1001 wieder austritt. Die Einlassöffnung 10011 weist eine Einlassbreite b₁₀₀₁₁ auf und die Auslassöffnung 10012 eine Auslassbreite b₁₀₀₁₂. Diese Breiten sind in der Oszillationsebene im Wesentlichen senkrecht zur Fluidstromrichtung, also senkrecht zu der Längsachse A, definiert.

Der Abstand zwischen der Einlassöffnung 10011 und der Auslassöffnung 10012 entlang der Längsachse A ist die Länge l₁₀₀₁ der Strömungskammer 1001. Die Breite b₁₀₀₁ der Strömungskammer 1001 ist die maximale Ausdehnung der Strömungskammer 1001 in der Oszillationsebene quer zur Längsachse A. Die Tiefe t₁₀₀₁ der Strömungskammer 1001 (Figur 3) ist die Ausdehnung der Strömungskammer 1001 quer zur Oszillationsebene und quer zur Längsachse A. Die Breite b₁₀₀₁ kann in einem Bereich zwischen 0,001 mm und 200 mm liegen. Bei einer bevorzugten Ausführungsvariante liegt die Breite b₁₀₀₁ zwischen 0,02 mm und 10 mm. Die Länge l₁₀₀₁ liegt bezogen auf die Breite b₁₀₀₁ vorzugsweise in folgendem Bereich: 1/3·b₁₀₀₁ ≤ l₁₀₀₁ ≤ 7·b₁₀₀₁.

Die Einlassbreite b₁₀₀₁₁ beträgt 1/3 bis 1/30 der Breite b₁₀₀₁ der Strömungskammer 1001, vorzugsweise 1/5 bis 1/15. Die Auslassbreite b₁₀₀₁₂ beträgt 1/3 bis 1/50 der Breite b₁₀₀₁ der Strömungskammer 1001, vorzugsweise 1/3 bis 1/20. Die Auslassbreite b₁₀₀₁₂ wird in Abhängigkeit von dem Volumendurchfluss, der Tiefe t₁₀₀₁ der Strömungskammer 1001, der Eingangsgeschwindigkeit des Fluids beziehungsweise des Eingangsdrucks des Fluids und der gewünschten Oszillationsfrequenz des austretenden Fluidstroms gewählt. Ein bevorzugter Oszillationsfrequenzbereich liegt zwischen 10 und 1000 kHz. Die Tiefe t₁₀₀₁ der Strömungskammer 1001 kann veränderlich sein. Mit einer veränderlichen Tiefe t₁₀₀₁ kann die Frequenz des erzeugten Ultraschallsignals eingestellt werden. Die Tiefe t₁₀₀₁ der Strömungskammer 1001 kann beispielsweise durch stempelartiges Verschieben der Vorderwand 1121 und/oder der Rückwand 1122 verändert werden. Alternativ kann/können die Vorderwand 1121 und/oder Rückwand 1122 elastisch ausgestaltet sein, so dass sie sich durch eine äußere Krafteinwirkung in die Strömungskammer 1001 hineinbewegen.

Die Strömungskammer 1001 umfasst einen Hauptstromkanal 10013, der sich zentral durch die Strömungskammer 1001 des fluidischen Bauteils 112 erstreckt. Der Hauptstromkanal 10013 erstreckt sich im Wesentlichen geradlinig entlang der Längsachse A, so dass der Fluidstrom im Hauptstromkanal 10013 im Wesentlichen entlang der Längsachse A des Teilsystems 1000 des fluidischen Bauteils 112 strömt.

An seinem stromabwärtigen Ende geht der Hauptstromkanal 10013 in einen Auslasskanal 10017 über, der sich in der Oszillationsebene betrachtet stromabwärts verjüngt und in der Auslassöffnung 10012 endet.

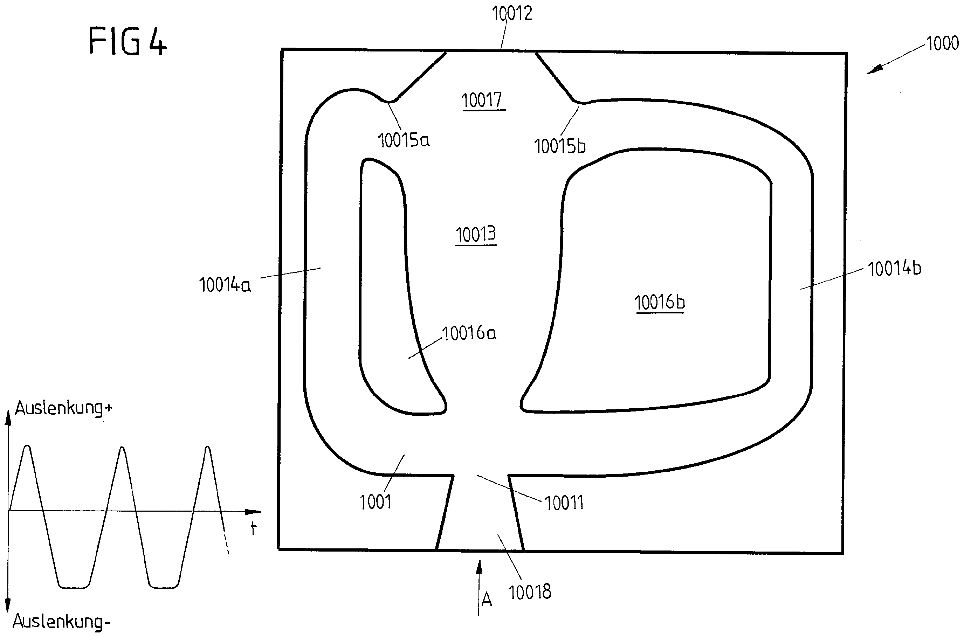

Zur Ausbildung einer Oszillation des Fluidstroms an der Auslassöffnung 10012 der Strömungskammer 1001 umfasst die Strömungskammer 1001 beispielhaft zwei Nebenstromkanäle 10014a, 10014b. Dabei ist der Hauptstromkanal 10013 (in der Oszillationsebene und quer zur Längsachse A betrachtet) zwischen den zwei Nebenstromkanälen 10014a, 10014b angeordnet ist. Unmittelbar stromabwärts der Einlassöffnung 10011 der Strömungskammer 1001 teilt sich die Strömungskammer 1001 in den Hauptstromkanal 10013 und die zwei Nebenstromkanäle 10014a, 10014b, die dann unmittelbar stromaufwärts der Auslassöffnung 10012 der Strömungskammer 1001 zusammengeführt werden. Die zwei Nebenstromkanäle 10014a, 10014b sind hier beispielhaft identisch geformt und symmetrisch bezüglich der Längsachse A angeordnet. Alternativ können die Nebenstromkanäle nicht symmetrisch geformt sein, wie später im Zusammenhang mit Figur 4 erläutert wird.

Die Nebenstromkanäle 10014a, 10014b erstrecken sich ausgehend von der Einlassöffnung 10011 der Strömungskammer 1001 in einem ersten Abschnitt jeweils zunächst in einem Winkel von im Wesentlichen 90° zu der Längsachse A in entgegengesetzte Richtungen. Anschließend biegen die Nebenstromkanäle 10014a, 1014b ab, so dass sie sich jeweils im Wesentlichen parallel zu der Längsachse A (in Richtung auf die Auslassöffnung 10012 der Strömungskammer 1001) erstrecken (zweiter Abschnitt). Um die Nebenstromkanäle 10014a, 10014b und den Hauptstromkanal 10013 wieder zusammenzuführen, ändern die Nebenstromkanäle 10014a, 10014b am Ende des zweiten Abschnitts nochmals ihre Richtung, so dass sie jeweils im Wesentlichen in Richtung auf die Längsachse A gerichtet sind (dritter Abschnitt). In der Ausführungsform der Figur 2 ändert sich die Richtung der Nebenstromkanäle 10014a, 10014b beim Übergang vom zweiten in den dritten Abschnitt um einen Winkel von ca. 120°. Jedoch können für die Richtungsänderung zwischen diesen beiden Abschnitten (und zwischen dem ersten und dem zweiten Abschnitt) der Nebenstromkanäle 10014a, 10014b auch andere als der hier genannte Winkel gewählt werden.

Die Nebenstromkanäle 10014a, 10014b sind ein Mittel zur Beeinflussung der Richtung des Fluidstromes, der die Strömungskammer 1001 durchströmt, und letztlich ein Mittel zur Ausbildung einer Oszillation des Fluidstroms an der Auslassöffnung 10012 der Strömungskammer 1001. Die Nebenstromkanäle 10014a, 10014b weisen hierfür jeweils einen Eingang 10014a1, 10014b1, der durch das der Auslassöffnung 10012 zugewandte Ende der Nebenstromkanäle 10014a, 10014b gebildet wird, und jeweils einen Ausgang 10014a2, 10014b2 auf, der durch das der Einlassöffnung 10011 zugewandte Ende der Nebenstromkanäle 10014a, 10014b gebildet wird. Durch die Eingänge 10014a1, 10014b1 fließt ein kleiner Teil des Fluidstroms, die Nebenströme, in die Nebenstromkanäle 10014a, 10014b. Der restliche Teil des Fluidstroms (der sogenannte Hauptstrom) tritt über die Auslassöffnung 10012 der Strömungskammer 1001 aus dem ersten Teilsystem 1000 des fluidischen Bauteils 112 aus. Die Nebenströme treten an den Ausgängen 10014a2, 10014b2 aus den Nebenstromkanälen 10014a, 10014b aus, wo sie einen seitlichen (quer zur Längsachse A) Impuls auf den durch die Einlassöffnung 10011 der Strömungskammer 1001 eintretenden Fluidstrom ausüben können. Dabei wird die Richtung des Fluidstromes derart beeinflusst, dass der an der Auslassöffnung 10012 der Strömungskammer 1001 austretende Hauptstrom räumlich und / oder zeitlich oszilliert. Die Oszillation erfolgt in einer Ebene, der sogenannten Oszillationsebene. Der oszillierende Fluidstrom bewegt sich innerhalb der Oszillationsebene zwischen zwei maximalen Auslenkungen, die den sogenannten Oszillationswinkel einschließen.

In der Ausführungsform aus Figur 2 sind in der Oszillationsebene der Hauptstromkanal 10013 und die Nebenstromkanäle 10014a, 10014b angeordnet. Die Nebenstromkanäle können jedoch auch außerhalb der Oszillationsebene angeordnet sein. Diese Nebenstromkanäle können beispielsweise mittels Schläuchen außerhalb der Oszillationsebene realisiert werden oder durch Kanäle, die in einem Winkel zur Oszillationsebene verlaufen. Außerdem können ein oder mehrere zusätzliche Nebenstromkanäle vorgesehen sein, die so angeordnet sind, dass sie eine direkte Verbindung von der Fluidstromquelle 111 oder von dem Bereich um die Einlassöffnung 10011 der Strömungskammer 1001 herum zum Eingang 10014a1, 10014b1 der Nebenstromkanäle 10014a, 10014b (oder zum Bereich um den Eingang 10014a1 oder 10014b1 herum) ausbilden, um somit dort intern einen Gegendruck zu erzeugen. Durch diese Maßnahme kann der Pulsabstand T angepasst werden.

Die Nebenstromkanäle 10014a, 10014b weisen in der hier dargestellten Ausführungsvariante jeweils eine Querschnittsfläche (quer zur Fluidstromrichtung des die Nebenstromkanäle durchströmenden Fluids) auf, die über die gesamte Länge (vom jeweiligen Eingang 10014a1, 10014b1 bis zum jeweiligen Ausgang 10014a2, 10014b2) der Nebenstromkanäle 10014a, 10014b nahezu konstant ist. Die Querschnittsflächen können aber auch nicht konstant sein. Die Auswirkung einer nicht konstanten Querschnittsfläche wird später beschrieben. Demgegenüber nimmt die Größe der Querschnittsfläche des Hauptstromkanals 10013 in Strömungsrichtung des Hauptstromes (also in Richtung von der Einlassöffnung 10011 zu der Auslassöffnung 10012) im Wesentlichen stetig zu.

Der Hauptstromkanal 10013 ist von jedem Nebenstromkanal 10014a, 10014b durch einen inneren Block 10016a, 10016b getrennt. Die zwei Blöcke 10016a, 10016b sind in der Ausführungsform aus Figur 2 identisch in Form und Größe und symmetrisch bezüglich der Längsachse A angeordnet. Prinzipiell können sie jedoch auch unterschiedlich ausgebildet und/oder nicht symmetrisch ausgerichtet sein. Ein Beispiel dafür ist in Figur 4 dargestellt. Bei nicht symmetrischer Ausrichtung der Blöcke 10016a, 10016b ist auch die Form des Hauptstromkanals 103 nicht symmetrisch bezüglich der Längsachse A.

Die Form der Blöcke 10016a, 10016b, die in Figur 2 dargestellt ist, ist nur beispielhaft und kann variiert werden. Die Blöcke 10016a, 10016b aus Figur 2 weisen abgerundete Kanten auf. So weisen die Blöcke 10016a, 10016b an ihrem der Einlassöffnung 10011 der Strömungskammer 1001 und dem Hauptstromkanal 10013 zugewandten Ende jeweils einen Radius 10019a, 10019b auf. Die Kanten können auch nicht abgerundet sein bzw. Radien mit dem Wert annähernd Null aufweisen. Stromabwärts nimmt der Abstand der beiden inneren Blöcke 10016a, 10016b zueinander entlang der Breite b₁₀₀₁ der Strömungskammer 1001 stetig zu, so dass sie (in der Oszillationsebene betrachtet) einen keilförmigen Hauptstromkanal 10013 einschließen. Der kleinste Abstand der beiden inneren Blöcke 10016a, 10016b zueinander befindet sich prinzipiell am stromaufwärtigen Ende der inneren Blöcke 10016a, 10016b. Aufgrund der Radien 10019a, 10019b verschiebt sich der kleinste Abstand geringfügig stromabwärts. Die Breite des Hauptstromkanals 10013 an seiner engsten Stelle (zwischen den Blöcken 10016a, 10016b) ist größer als die Breite b₁₀₀₁₁ der Einlassöffnung 10011 der Strömungskammer 1001.

Die Form des Hauptstromkanals 10013 wird insbesondere durch die nach innen (in Richtung des Hauptstromkanals 10013) zeigenden Flächen der Blöcke 10016a, 10016b gebildet, die sich im Wesentlichen senkrecht zu der Oszillationsebene erstrecken. Die nach innen zeigenden Flächen können eine (leichte) Krümmung aufweisen oder durch einen beziehungsweise mehrere Radien, ein Polynom und/oder eine oder mehrere ebene Flächen beziehungsweise durch eine Mischform davon gebildet werden.

Am Eingang 10014a1, 10014b1 der Nebenstromkanäle 10014a, 10014b, sind Separatoren 10015a, 10015b in Form von Einbuchtungen (die in die Strömungskammer hineinragen) vorgesehen. Aus der Perspektive der Strömung sind die Separatoren konvex. Dabei ragt am Eingang 10014a1, 10014b1 jedes Nebenstromkanals 10014a, 10014b jeweils eine Einbuchtung 10015a, 10015b über einen Abschnitt der Umfangskante des Nebenstromkanals 10014a, 10014b in den jeweiligen Nebenstromkanal 10014a, 10014b und verändert an dieser Stelle unter Verkleinerung der Querschnittsfläche dessen Querschnittsform. In der Ausführungsform aus Figur 2 ist der Abschnitt der Umfangskante so gewählt, dass jede Einbuchtung 10015a, 10015b (unter anderem auch) auf die Einlassöffnung 10011 der Strömungskammer 1001 (im Wesentlichen parallel zu der Längsachse A ausgerichtet) gerichtet ist. Je nach Anwendungsfall können die Separatoren 10015a, 10015b anders ausgerichtet sein oder auch komplett weggelassen werden. Auch kann nur an einem der Nebenstromkanäle 10014a, 10014b ein Separator 10015a, 10015b vorgesehen sein. Damit können der Pulsabstand T und die Pulsbreite b eingestellt werden. Durch die Separatoren 10015a, 10015b wird die Abtrennung der Nebenströme vom Hauptstrom beeinflusst und gesteuert. Durch Form, Größe und Ausrichtung der Separatoren 10015a, 10015b kann die Menge Fluid, die in die Nebenstromkanäle 10014a, 10014b strömt, sowie die Richtung der Nebenströme beeinflusst werden. Das führt wiederum zu einer Beeinflussung des Austrittswinkels des Hauptstroms (und damit zu einer Beeinflussung des Oszillationswinkels) an der Auslassöffnung 10012 der Strömungskammer 1001 (also des ersten Teilsystems 1000 des fluidischen Bauteils 112) sowie der Frequenz, mit der der Hauptstrom an der Auslassöffnung 10012 oszilliert. Durch Wahl der Größe, Orientierung und/oder Form der Separatoren 10015a, 10015b kann somit gezielt das Profil des an der Auslassöffnung 10012 der Strömungskammer 1001 austretenden Fluidstroms beeinflusst werden und somit die Pulsbreite b des anschließend erzeugten Fluidstrompulses. Besonders vorteilhaft ist, wenn die Separatoren 10015a, 10015b (entlang der Längsachse A betrachtet) stromabwärts der Position angeordnet sind, wo sich der Hauptstrom von den inneren Blöcken 10016a, 10016b löst und ein Teil des Fluidstroms in die Nebenstromkanäle 10014a, 10014b eintritt.

Die Nebenstromkanäle sind nur ein Beispiel für ein Mittel zur Ausbildung der Oszillation des austretenden Fluidstroms. Auch andere aus dem Stand der Technik bekannte Mittel zur Ausbildung der Oszillation des austretenden Fluidstroms können verwendet werden, beispielsweise Mittel, welche mittels kollidierender Fluidstrahlen oder durch interagierende Wirbel beziehungsweise Rezirkulationsgebiete eine Oszillation erzeugen, oder andere Mittel zur Ausbildung einer Oszillation des Fluidstroms ohne Nebenstromkanäle. Insbesondere kann das fluidische Bauteil ein sogenannter feedbackfreier Oszillator sein. Fluidische Bauteile mit Nebenstromkanälen als Mittel zur Ausbildung der Oszillation des austretenden Fluidstroms haben den Vorteil, dass bei zuverlässig ein oszillierender Fluidstrom mit einer Oszillationsfrequenz von über 20 kHz erzeugbar ist.

Der Einlassöffnung 10011 der Strömungskammer 1001 ist stromaufwärts ein trichterförmiger Ansatz 10018 vorgeschaltet, der sich (in der Oszillationsebene) in Richtung auf die Einlassöffnung 10011 (stromabwärts) verjüngt. Die Begrenzungswände des trichterförmigen Ansatzes 10018, die sich im Wesentlichen senkrecht zu der Oszillationsebene erstrecken, schließen einen Winkel ε ein. Auch stromaufwärts der Auslassöffnung 10012 verjüngt sich die Strömungskammer 1001 (in der Oszillationsebene). Die Verjüngung wird durch den bereits erwähnten Auslasskanal 10017 gebildet, der sich zwischen den Eingängen 10014a1, 10014b1 der Nebenstromkanäle 10014a, 10014b und der Auslassöffnung 10012 der Strömungskammer 1001 erstreckt. In Figur 2 werden die Eingänge 10014a1, 10014b1 der Nebenstromkanäle 10014a, 10014b durch die Separatoren 10015a, 10015b vorgegeben. Die Begrenzungswände des Auslasskanals 10017, die sich im Wesentlichen senkrecht zu der Oszillationsebene erstrecken, schließen einen Winkel δ ein.

Gemäß der Figur 2 verjüngen sich der trichterförmige Ansatz 10018 und der Auslasskanal 10017 derart, dass nur deren Breite, das heißt deren Ausdehnung in der Oszillationsebene senkrecht zu der Längsachse A, jeweils stromabwärts abnimmt. Zusätzlich können sich der trichterförmige Ansatz 10018 und der Auslasskanal 10017 stromabwärts auch entlang der Tiefe t₁₀₀₁ der Strömungskammer 1001 verjüngen, das heißt senkrecht zur Oszillationsebene und senkrecht zu der Längsachse A. Ferner kann sich nur der Ansatz 10018 in der Tiefe oder in der Breite verjüngen, während sich der Auslasskanal 10017 sowohl in der Breite als auch in der Tiefe verjüngt, und umgekehrt. Das Ausmaß der Verjüngung des Auslasskanals 10017 beeinflusst die Richtcharakteristik des aus der Auslassöffnung 10012 der Strömungskammer 1001 austretenden Fluidstroms. Die Form des trichterförmigen Ansatzes 10018 und des Auslasskanals 10017 sind in Figur 2 nur beispielhaft gezeigt. Hier nimmt deren Breite stromabwärts jeweils linear ab. Andere Formen der Verjüngung sind möglich.

Die Auslassöffnung 10012 der Strömungskammer 1001 ist durch einen Radius 10019 abgerundet. Der Radius 10019 ist ungleich 0. In anderen Ausführungsformen kann der Radius 10019 gleich 0 sein, so dass die Auslassöffnung 10012 scharfkantig ist.

Die Einlassöffnung 10011 und die Auslassöffnung 10012 weisen jeweils eine rechteckige Querschnittsfläche (quer zur Längsachse A) auf. Diese weisen jeweils die gleiche Tiefe t₁₀₀₁ auf (nämlich die Tiefe der Strömungskammer 1001), unterscheiden sich jedoch in ihrer Breite b₁₀₀₁₁, b₁₀₀₁₂. Alternativ ist auch eine nicht rechteckige Querschnittsfläche für die Einlassöffnung 10011 und die Auslassöffnung 10012 denkbar, zum Beispiel kreisförmig.

Mit dem ersten Teilsystem 1000 wird an der Auslassöffnung 10012 der Strömungskammer 1001 ein oszillierender Fluidstrom erzeugt, der mit einer bestimmten Oszillationsfrequenz in einer Oszillationsebene zwischen zwei maximalen Auslenkungen oszilliert, die den Oszillationswinkel einschließen. Die Oszillationsfrequenz hat einen großen Einfluss auf den Pulsabstand T zwischen den Fluidstrompulsen, die mittels des zweiten Teilsystems 2000 erzeugt werden.

Stromabwärts des ersten Teilsystems 1000 ist das zweite Teilsystem 2000 angeordnet. Das zweite Teilsystem 2000 des fluidischen Bauteils 112 kann auch als Separationsvorrichtung bezeichnet werden. Die Separationsvorrichtung 2000 umfasst eine Separationskammer 2001 mit einer Einlassöffnung 20011, einer ersten Auslassöffnung 20012 und einer zweiten Auslassöffnung 20013. Grundsätzlich kann die Separationskammer 2001 auch mehr als zwei Auslassöffnungen aufweisen. Die Auslassöffnung 10012 der Strömungskammer 1001 entspricht hier der Einlassöffnung 20011 der Separationskammer 2001. Die erste und die zweite Auslassöffnung 20012, 20013 sind als Auslasskanäle ausgebildet, die aus der Separationskammer 2001 herausragen.

Der oszillierende Fluidstrom tritt durch die Einlassöffnung 20011 in die Separationskammer 2001 ein. Jeweils ein Teil des Fluidstroms tritt durch die erste Auslassöffnung 20012 und die zweite Auslassöffnung 20013 aus der Separationsvorrichtung 2000 aus. Zwischen der ersten Auslassöffnung 20012 und der zweiten Auslassöffnung 20013 ist ein Strömungsteiler 20014 vorgesehen, der den oszillierenden Fluidstrom wechselseitig (abwechselnd) in die erste und zweite Auslassöffnung 20012, 20013 der Separationsvorrichtung 2000 lenkt. Da der Strömungsteiler 20014 einen oszillierenden Fluidstrom in zwei räumlich getrennten Auslassöffnungen 20012, 20013 verteilt, werden jeweils Fluidstrompulse erzeugt. Vorzugsweise beträgt die Geschwindigkeit des Fluidstroms innerhalb einer Auslassöffnung 20012, 20013 periodisch kurzzeitig annähernd 0 oder ist sie stark (um beispielsweise 75 % der maximalen Geschwindigkeit reduziert. Besonders vorteilhaft ist, wenn sich die Fließrichtung des Fluides periodisch kurzzeitig ändert, das heißt sich das Vorzeichen des Geschwindigkeitsfeldes in Fluidstromrichtung periodisch kurzfristig ändert.

In der Folge tritt aus der ersten Auslassöffnung 20012 in Form eines Ultraschallsignals der Teil des Fluidstroms aus, der beispielsweise einer Messung dienen kann. Aus der zweiten Auslassöffnung 20013 entweicht das Restsignal, das für die Messung nicht unbedingt genutzt wird. In dem zweiten Auslasskanal 20013 (beispielsweise an dessen Innenoberfläche) sind akustische Dämpfungsmaterialien oder Dämpfungssysteme vorgesehen, um das Restsignal abzuschwächen und die Qualität der Messung zu erhöhen, der das Ultraschallsignal aus der ersten Auslassöffnung 20012 zur Verfügung gestellt werden kann.

In der in Figur 2 dargestellten Ausführungsform fließt ungefähr die Hälfte des durch die Einlassöffnung 20011 in die Separationskammer 2001 einströmenden Fluidstroms durch die erste Auslassöffnung 20012. Der übrige Teil des Fluidstroms strömt durch die zweite Auslassöffnung 20013 aus der Separationsvorrichtung 2000 heraus. Das aus der zweiten Auslassöffnung austretende Restsignal kann jedoch auch einer Verwendung zugeführt werden. Beispielsweise können die aus der zweiten Auslassöffnung 20013 austretenden Fluidstrompulse als Triggersignal verwendet und auf den Empfänger 12 der Ultraschallmessvorrichtung 1 gelenkt werden. Das detektierte Triggersignal kann von der Signalverarbeitungseinheit 13 verwendet werden. Eine andere Möglichkeit, ein Triggersignal abzugreifen, das anzeigt, wann ein Ultraschallsignal durch die erste Auslassöffnung 20012 abgegeben wird, kann durch eine Messvorrichtung geschaffen werden, die beispielsweise innerhalb der Strömungskammer 1001 des ersten Teilsystems 1000, zum Beispiel in einem der Nebenstromkanäle 10014a, 10014b angeordnet ist. Das aus der zweiten Auslassöffnung 20013 austretende Restsignal kann aber auch für Messungen, insbesondere in einer anderen Raumrichtung, verwendet werden.

Der erste Auslasskanal 20012 und der zweite Auslasskanal 20013 sind derart geformt, dass der Teil des Fluidstroms, der aus dem ersten Auslasskanal 20012 austritt, und der Teil des Fluidstroms, der aus dem zweiten Auslasskanal 20013 der Separationsvorrichtung austritt, jeweils entlang einer Achse R₁, R₂ gerichtet ist, wobei die Achsen R₁, R₂ in Fluidstromrichtung auseinanderlaufen. In der Ausführungsform aus Figur 2 schließen die beiden Achsen R₁, R₂ einen Winkel von im Wesentlichen 90° miteinander ein. Andere Winkel sind möglich.

Die Separationskammer 2001 ist in dieser Ausführungsvariante in Fluidstromrichtung divergent geformt. Die Form und Größe der Separationskammer 2001 können so ausgebildet sein, dass in der Separationskammer 2001 Wirbel erzeugt werden, um so die Pulsbreite b und den Pulsabstand T der Fluidstrompulse, die durch die erste Auslassöffnung 20012 aus der Separationskammer 2001 austreten, gezielt einzustellen. Auf zur Erzeugung von Wirbeln geeignete Ausgestaltungen der Separationskammer 2001 wird später eingegangen. Die Wirbel können alleinig durch die Form der Separationskammer 2001 oder im Zusammenspiel mit dem Strömungsteiler 20014 erzeugt werden. Die Wirbel unterstützen die Geschwindigkeitsreduktion beziehungsweise Geschwindigkeitsumkehr der Fluidströme in den Auslassöffnungen 20012, 20013. Hierdurch kann die Ausbildung eines binären Strömungsmusters in den Auslassöffnungen 20012, 20013 unterstützt werden und somit eine Fluidstrompulsfolge erzeugt werden mit Pulsen, die einen möglichst steilen Pulsanstieg und eine geringe Pulsbreite b aufweisen.

Zur Einstellung der gewünschten Pulsbreite b der Fluidstrompulse, die durch die erste Auslassöffnung 20012 aus der Separationskammer 2001 austreten, kann die Breite (Ausdehnung in der Oszillationsebene und quer zur Fluidstromrichtung) der ersten Auslassöffnung 20012 und die Tiefe (Ausdehnung quer zur Oszillationsebene) der ersten Auslassöffnung 20012 verändert werden. Die Breite und Tiefe der ersten Auslassöffnung 20012 sind hier an der Stelle der kanalförmigen Auslassöffnung 20012 definiert, wo die Querschnittsfläche des Kanals quer zur Strömungsrichtung am geringsten ist. Zur Einstellung der Pulsbreite können auch die Breite und die Tiefe des Kanals an seinem stromabwärtigen Ende verändert werden. Je kleiner die genannten Breiten und Tiefen gewählt werden, umso geringer ist die Pulsbreite b.

Der Pulsabstand T sowie die Pulsbreite b werden zum Teil durch die Position des Strömungsteilers 20014 bestimmt. So kann der Abstand l₂₀₀₁ (entlang der Längsachse A) zwischen der Einlassöffnung 20011 der Separationskammer 2001 und dem Strömungsteiler 20014 variiert werden, um die Pulsbreite b anzupassen. Dabei kann der Strömungsteiler 20014 gegenüber der Einlassöffnung 20011 innerhalb der Oszillationsebene verschoben werden, also seine Position ändern. Die Verschiebung kann ausschließlich entlang der Längsachse A, ausschließlich quer zur Längsachse A oder sowohl entlang als auch quer zur Längsachse A erfolgen. Zudem kann der Strömungsteiler 20014 um eine Achse, die sich senkrecht zur Oszillationsebene erstreckt und sich in der Mitte der Einlassöffnung 20011 der Separationskammer 2001 befindet, um einen Winkel κ gedreht werden. Eine solche Rotation des Strömungsteilers 20014 und Verschiebung in der Oszillationsebene ist in Figur 2 durch eine gepunktete Linie dargestellt. Durch Rotation des Strömungsteilers 20014 um den Winkel κ bei gleichbleibenden Abstand l₂₀₀₁ zwischen der Einlassöffnung 20011 der Separationskammer 2001 und dem Strömungsteiler 20014 wird in Abhängigkeit des zeitlichen Oszillationsverhalten des fluidischen Bauteils 112 der Pulsabstand T vergrößert und in der Regel die Pulsbreite b verringert und vice versa. Wie sich die Pulsbreite b dabei konkret verändert, ist im Wesentlichen durch die Oszillation des an der Auslassöffnung 10012 austretenden / an der Einlassöffnung 20011 eintretenden Fluidstrom abhängig.

Der Strömungsteiler 20014 kann unterschiedlich ausgebildet sein. Die in Figur 2 dargestellte Ausführungsform des Strömungsteilers 20014 erzeugt ein im Wesentlichen binäres beziehungsweise digitales Strömungsmuster. Hier weist der Fluidstromteiler 20014 eine in Fluidstromrichtung nach außen gekrümmte Fläche oder Wand auf. Alternativ kann der Strömungsteiler 20014 einen (scharfen oder abgerundeten) Keil mit einer Kante aufweisen, der entgegen der Fluidstromrichtung in die Separationskammer 2001 hineinragt.

In Figur 4 ist eine Schnittdarstellung eines ersten Teilsystems 1000 gemäß einer weiteren Ausführungsform dargestellt. Dieses Teilsystem 1000 kann kombiniert mit einem zweiten Teilsystem 2000 (beispielsweise das zweite Teilsystem 2000 aus Figur 2) als fluidisches Bauteil zur Erzeugung eines Ultraschallsignals für eine Ultraschallmessvorrichtung 1 verwendet werden. Ein bevorzugter Oszillationsfrequenzbereich liegt bei dieser Ausführungsform zwischen 10 und 2000 Hz. Aus einem oszillierenden Fluidstrom mit niedriger Oszillationsfrequenz kann durch Kombination mit dem Teilsystem 2000 ein hochfrequentes Anregungssignal erzeugt werden. Das erste Teilsystem 1000 aus Figur 4 unterscheidet sich von dem ersten Teilsystem 1000 aus Figur 2 insbesondere darin, dass die Strömungskammer 1001 nicht symmetrisch bezüglich der Längsachse A ist. So ist der eine (in Figur 4 rechts dargestellte) Nebenstromkanal 10014b länger als der andere (in Figur 4 links dargestellte) Nebenstromkanal 10014a. Um dies zu erreichen, sind die inneren Blöcke 10016a, 10016b unterschiedlich geformt. Insbesondere ist der eine (in Figur 4 rechts dargestellte) innere Block 10016b größer als der andere (in Figur 4 links dargestellte) innere Block 10016a. An der Auslassöffnung 10012 der Strömungskammer 1001 aus Figur 4 wird eine regelmäßige komplexe Schwingung erzeugt. Im zeitlichen Verlauf oszilliert der Fluidstrom nicht gleichmäßig. Vielmehr befindet sich der Fluidstrom nur kurzzeitig in der einen (maximalen) Auslenkung (bspw. auf der rechten Seite), während er sich im Verhältnis länger in der anderen (maximalen) Auslenkung (bspw. auf der linken Seite) befindet. Die Position des oszillierenden Fluidstroms zwischen den beiden maximalen Auslenkungen (+ und -) in Abhängigkeit von der Zeit t ist in Figur 4 in einem Diagramm schematisch dargestellt. Das Verhältnis X_{T} der Verweildauer in der anderen (maximalen) Auslenkung zu der Verweildauer in der einen (maximalen) Auslenkung bestimmt im Wesentlichen den Pulsabstand T. Zwischen dem Pulsabstand T und dem Faktor X_{T} besteht eine annähernd proportionale Beziehung.

Der Faktor X_{T} wird durch mehrere geometrische Parameter der Strömungskammer 1001 beeinflusst, insbesondere durch die Länge (Ausdehnung zwischen dem Eingang 10014a1, 10014b1 und dem Ausgang10014a2, 10014b2 entlang der Fluidstromrichtung), Breite (Ausdehnung in der Oszillationsebene und quer zur Fluidstromrichtung) und Tiefe (Ausdehnung quer zur Oszillationsebene) der Nebenstromkanäle 10014a, 10014b, der Form der Nebenstromkanäle 10014a, 10014b oder die Form der nach innen (auf den Hauptstromkanal 10013) zeigenden Flächen der inneren Blöcke 10016a, 10016b. Der Faktor X_{T} (und damit der Pulsabstand T) ist dabei proportional zu dem Längenverhältnis der beiden Nebenstromkanäle 10014a, 10014b.

Je nach Anwendungsfeld werden unterschiedliche Pulsabstände T benötigt. Um das Längenverhältnis der beiden Nebenstromkanäle 10014a, 10014b zu erhöhen, ohne dabei den äußeren Bauraum der Nebenstromkanäle 10014a, 10014b oder die Breite b₁₀₀₁ der Strömungskammer 1001 massiv zu verändern, kann einer der beiden Nebenstromkanäle 10014a, 10014b mäanderförmig ausgebildet sein, um so die Weglänge für das durchfließende Fluid zu erhöhen. Ferner kann der Faktor X_{T} erhöht werden, indem zusätzliche Widerstände oder Turbulatoren oder auch Verwirbelungskammern in einen der beiden Nebenstromkanäle 10014a, 10014b ausgebildet sind.

Um das mit dem fluidischen Bauteil erzeugte Ultraschallsignal für eine Abstandsbestimmung nutzen zu können, ist es vorteilhaft, wenn das Längenverhältnis der beiden Nebenstromkanäle 10014a, 10014b mindestens 2 und insbesondere mindestens 5 beträgt. Jedoch kann das Längenverhältnis der beiden Nebenstromkanäle 10014a, 10014b auch weit über 2000 betragen. Dabei ist zu beachten, dass die Pulsbreite b und der Pulsabstand T auch von der Ausgestaltung des zweiten Teilsystems 2000 abhängt.

Außerdem können der Pulsabstand T und die Pulsbreite b durch eine Reihenschaltung von ersten Teilsystemen 1000 und/oder fluidischen Bauteilen 112 eingestellt werden. Hierbei kann die Auslassöffnung 10012 (20012) eines ersten Teilsystems 1000 (eines fluidischen Bauteils 112) fluidisch mit der Einlassöffnung 10011 eines weiteren ersten Teilsystems 1000 oder fluidischen Bauteils 112 usw. verbunden sein.

Ferner kann der Pulsabstand T durch Verschiebung der Auslassöffnung 10012 in der Oszillationsebene und quer zur Fluidstromrichtung (quer zur Längsachse A), beispielsweise zur linken Seite, eingestellt werden. Hierdurch kann das zeitliche Oszillationsverhalten des Fluidstroms soweit geändert werden, dass die zuvor genannte regelmäßige komplexe Schwingung erzeugt werden kann.

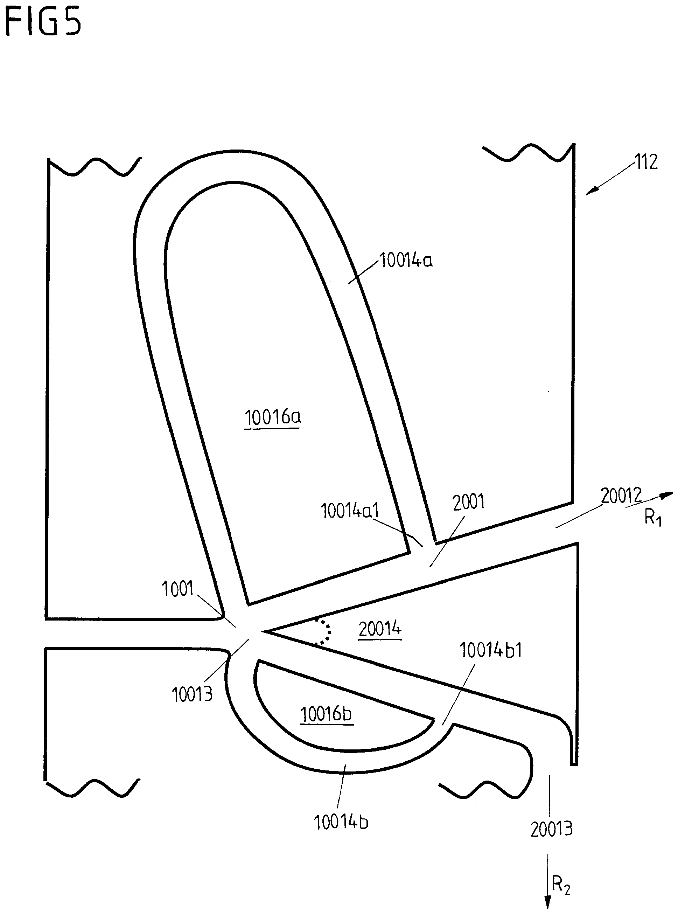

In Figur 5 ist eine Schnittdarstellung durch ein fluidisches Bauteil 112 gemäß einerweiteren Ausführungsform dargestellt. Das fluidische Bauteil 112 aus Figur 5 unterscheidet sich von dem fluidischen Bauteil 112 aus Figur 2 insbesondere darin, dass das zweite Teilsystem 2000 in das erste Teilsystem 1000 hineinragt. Konkret ragt der Strömungsteiler 20014 des zweiten Teilsystems 2000 in die Strömungskammer 1001 des ersten Teilsystems 1000. Die Eingänge 10014a1, 10014b1 der Nebenstromkanäle 10014a, 10014b zweigen hier nicht vom Hauptstromkanal 10013 der Strömungskammer 1001, sondern von der Separationskammer 2001 ab.

Der Strömungsteiler 20014 kann von der Ausgestaltung in Figur 5 abweichende Formen aufweisen, beispielsweise kann er wie der Strömungsteiler 20014 aus Figur 2 ausgebildet sein. Die Nebenstromkanäle 10014a, 10014b sind wie in der Ausführungsform aus Figur 4 unterschiedlich lang. Die Ausführungen in diesem Zusammenhang zu Figur 4 gelten entsprechend für die Nebenstromkanäle 10014a, 10014b aus Figur 5.

Die erste Auslassöffnung 20012 und die zweite Auslassöffnung 20013 der Separationskammer 2001 sind hier jeweils als Kanal ausgebildet. Dabei sind die beiden Kanäle 20012, 20013 derart geformt und ausgerichtet, dass der Teil des Fluidstroms, der aus der ersten Auslassöffnung 20012 der Separationsvorrichtung 2000 austritt, und der Teil des Fluidstroms, der aus der zweiten Auslassöffnung 20013 der Separationsvorrichtung 2000 austritt, jeweils entlang einer Achse R₁, R₂ gerichtet ist, wobei die Achsen R₁, R₂ einen Winkel von über 90° einschließen.

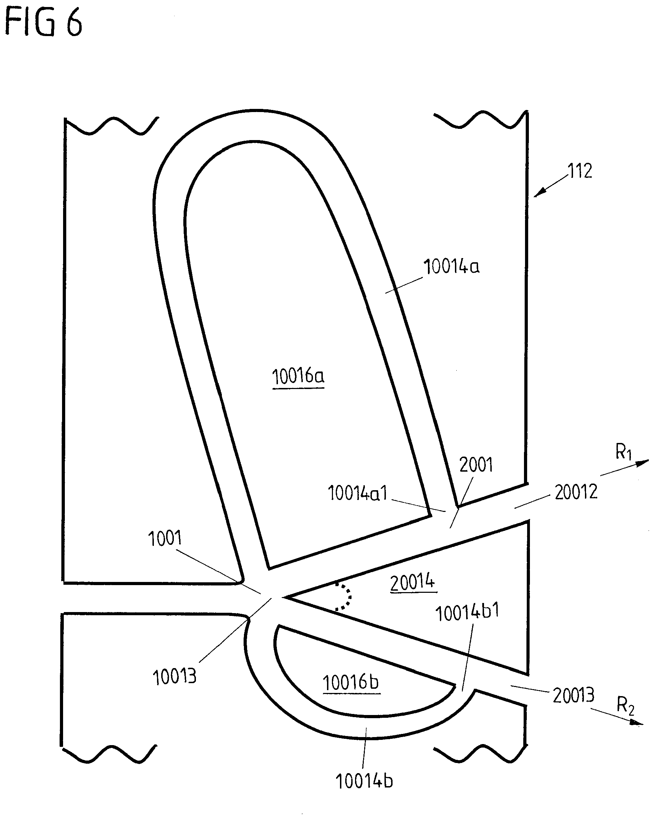

Die Ausführungsform aus Figur 6 entspricht im Wesentlichen der Ausführungsform aus Figur 5 und unterscheidet sich von letzterer lediglich in der Ausrichtung der Achsen R₁, R₂. So schließen die Achsen R₁, R₂ in der Ausführungsform von Figur 6 einen Winkel von unter 90° (zwischen 0° und 90°) ein.

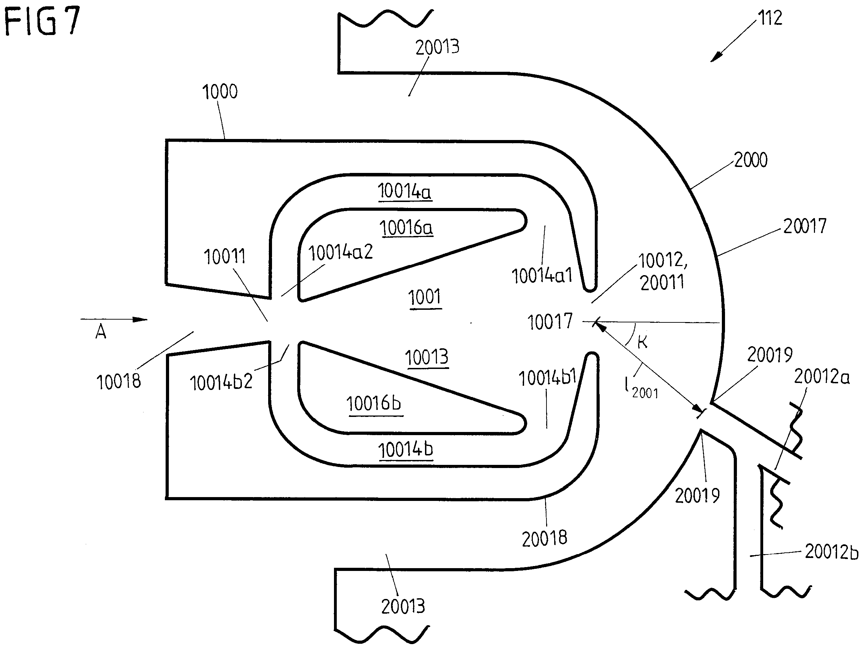

In Figur 7 ist eine Schnittdarstellung durch eine weitere Ausführungsform des fluidischen Bauteils 112 dargestellt. Ein bevorzugter Oszillationsfrequenzbereich liegt bei dieser Ausführungsform zwischen 10 und 2000 Hz. Dieses fluidische Bauteil 112 ist auch als einstellbares fluidisches Bauteil 112 ausführbar. Das fluidische Bauteil 112 umfasst im Wesentlichen eine erstes Teilsystem 1000 und ein zweites Teilsystem 2000. Das zweite Teilsystem 2000 unterscheidet sich von jenen aus den Figuren 2, 5 und 6 insbesondere darin, dass die Separationskammer 2001 mehr als zwei Auslassöffnungen aufweist, hier konkret vier Auslassöffnungen 20012a, 20012b, 20013. Es ist auch eine beliebige von vier abweichende Anzahl an Auslassöffnungen möglich.

Auch hier strömt der oszillierende Fluidstrom aus der Auslassöffnung 10012 der Strömungskammer 1001 des ersten Teilsystems 1000 in die Separationskammer 2001 des zweiten Teilsystems 2000 (der Separationsvorrichtung). Die Auslassöffnung 10012 der Strömungskammer 1001 entspricht der Einlassöffnung 20011 der Separationskammer 2001. Die Separationskammer 2001 wird durch Begrenzungswände 20017 und 20018 begrenzt, die sich jeweils im Wesentlichen senkrecht zu der Oszillationsebene erstrecken. Optional kann die Separationskammer 2001 zudem durch eine untere und/oder obere Begrenzungswand begrenzt sein, die sich im Wesentlichen parallel zu der Oszillationsebene erstrecken/erstreckt. Auch hier kann die Separationskammer 2001 so ausgebildet sein, dass dort Sekundärströmungen in Form von Wirbeln gezielt erzeugt werden. Diese Wirbel können durch Kavitäten beziehungsweise Ausbuchtungen in den Begrenzungswänden 20017 und oder 20018 erzeugt werden. Eine andere Möglichkeit zur zielgerichteten Erzeugung von Wirbeln ist die Anwendung von sogenannten Turbulatoren, die an den Begrenzungswänden 20017 und oder 20018 vorgesehen sind.

Die Einlassöffnung 20011 der Separationskammer 2001 ist als eine Unterbrechung in der ersten Begrenzungswand 20018 ausgebildet. Die zweite Begrenzungswand 20017, die in einem Abstand zu der Einlassöffnung 20011 der Separationskammer 2001 angeordnet ist (und aus Sicht des Fluids konkav gekrümmt ist), bildet hierbei zudem den Strömungsteiler. In der zweiten Begrenzungswand 20017 ist eine Unterbrechung ausgebildet, die in eine erste kanalförmige Auslassöffnung 20012a mündet. In die erste kanalförmige Auslassöffnung 20012a wird ein Teil des oszillierenden Fluidstroms gelenkt, der dort ein Ultraschallsignal mit definierter Pulsbreite b und definiertem Pulsabstand T ausbildet. Durch diese erste kanalförmige Auslassöffnung 20012a tritt das erzeugte Ultraschallsignal aus der Separationsvorrichtung 2000 aus und kann beispielsweise einer Messung zur Verfügung gestellt werden oder auch zur Bereitstellung eines Triggersignals genutzt werden. Diese Unterbrechung in der zweiten Begrenzungswand 20017 ist in einem Abstand l₂₀₀₁ (hier nicht entlang der Längsachse) zu der Einlassöffnung 20011 der Separationskammer 2001 angeordnet. Zudem ist diese Unterbrechung von der Längsachse A verschoben, so dass der Abstand l₂₀₀₁ mit der Längsachse A einen Winkel κ einschließt. Durch Änderung der Position der ersten kanalförmigen Auslassöffnung 20012a, das heißt durch Änderung des Winkels κ und des Abstands l₂₀₀₁, unter Beibehaltung des ersten Teilsystems 1000 kann im Wesentlichen der Pulsabstand T eingestellt werden. Am stromaufwärtigen Ende der ersten kanalförmigen Auslassöffnung 20012a kann ein Radius 20019 ausgebildet sein. Durch die Größe des Radius 20019 kann die Form des Ultraschallpulses (das heißt die Intensität des Pulses in Abhängigkeit von der Zeit) beeinflusst werden. Je kleiner der Radius 20019 ist, desto schneller nimmt die Intensität des Pulses zu, das heißt desto steiler ist der Anstieg des Pulses. Dementsprechend sinkt die Pulsbreite b.

Die erste kanalförmige Auslassöffnung 20012a weist eine Breite (Ausdehnung in der Oszillationsebene und quer zur Fluidstromrichtung) und eine Tiefe (Ausdehnung quer zur Oszillationsebene) auf. Die erste kanalförmige Auslassöffnung 20012a sowie deren Querschnittsfläche können beliebig geformt sein. So kann die Querschnittsfläche beispielsweise rechteckig sein. Vorteilhaft ist eine im Wesentlichen runde Querschnittsfläche, insbesondere auch am stromabwärtigen Ende der ersten kanalförmigen Auslassöffnung 20012a. Generell ist für sämtliche Ausführungsformen der Separationsvorrichtung 2000 eine runde Querschnittsfläche zumindest für die erste Auslassöffnung 20012 der Separationskammer 2001, durch die das Nutzsignal austritt, vorteilhaft. Durch Änderung der Breite und der Tiefe der ersten kanalförmigen Auslassöffnung 20012a kann insbesondere die Pulsbreite b des die erste kanalförmige Auslassöffnung 20012a durchströmenden Fluidstroms eingestellt werden. Dabei sollte die Breite der ersten kanalförmigen Auslassöffnung 20012a insbesondere kleiner als oder gleich 150% der Breite der Einlassöffnung 20011 der Separationskammer 2001 sein, vorzugsweise kleiner als oder gleich der Breite der Einlassöffnung 20011 der Separationskammer 2001, und besonders bevorzugt kleiner als oder gleich 75% der Breite der Einlassöffnung 20011 der Separationskammer 2001. Dabei ist die Breite der ersten kanalförmigen Auslassöffnung 20011a an der Stelle mit der kleinsten Querschnittsfläche, die das Fluid durchströmt, wenn es durch die erste kanalförmige Auslassöffnung 20012a strömt, definiert.

Gemäß einer Ausführungsform ist die Position der ersten kanalförmigen Auslassöffnung 20012a einstellbar, so dass der Pulsabstand T für den gewünschten Anwendungsbereich eingestellt werden kann. Gemäß einer weiteren Ausführungsform sind die Querschnittsform und die Querschnittsgröße der ersten kanalförmigen Auslassöffnung 20012a (insgesamt, an dem stromabwärtigen Ende oder an dem stromaufwärtigen Ende) einstellbar, so dass die gewünschte Pulsbreite b eingestellt werden kann.

In der hier dargestellten Ausführungsvariante zweigt von der ersten kanalförmigen Auslassöffnung 20012a eine weitere erste kanalförmige Auslassöffnung 20012b ab. Durch die weitere erste kanalförmige Auslassöffnung 20012b kann ein Teil des Nutzsignals in eine andere Richtung gelenkt werden als der Richtung, die durch die erste kanalförmige Auslassöffnung 20012a definiert wird. So kann das dort austretende Nutzsignal für eine andere Messrichtung genutzt werden. Auch können Breite und Tiefe dieser weiteren ersten kanalförmigen Auslassöffnung 20012b anders als bei der ersten kanalförmigen Auslassöffnung 20012a sein, so dass das dort austretende Nutzsignal einen (leicht) abweichenden Pulsabstand T und eine (leicht) abweichende Pulsbreite b aufweist. Alternativ kann die weitere erste kanalförmige Auslassöffnung 20012b zur Bereitstellung eines Triggersignals dienen.

Ferner weist die Separationskammer 2001 zwei zweite Auslassöffnungen 20013 auf, durch die jeweils ein Restsignal entlang der Längsachse A in einer der in der Strömungskammer 1001 herrschenden Fluidstromrichtung entgegengesetzten Richtung entweichen kann.

Es ist auch denkbar, dass die Separationskammer 2001 mehrere erste (kanalförmige) Auslassöffnungen 20012 aufweist, die jeweils für unterschiedliche Messrichtungen, zur Erzeugung eines Ultraschallsignals mit unterschiedlichen Pulsabständen T und/oder Pulsbreiten b sowie zur Abgabe eines Triggersignals genutzt werden können. Durch die Anzahl und Richtung der mehreren ersten kanalförmigen Auslassöffnungen 20012 kann die Richtcharakteristik beeinflusst werden.

Das erste Teilsystem 1000 weist im Vergleich zu dem ersten Teilsystem 1000 der Figuren 2 bis 6 andersartig geformte innere Blöcke 10016a, 10016b auf, wodurch sich auch die Form des Hauptstromkanals 10013 ändert. Zudem weist das erste Teilsystem 1000 aus Figur 7 (im Vergleich zu dem ersten Teilsystem 1000 aus Figur 2) keine Separatoren auf. Das erste Teilsystem 1000 aus Figur 7 ist durch eine andere Ausführungsform des ersten Teilsystems 1000 austauschbar.

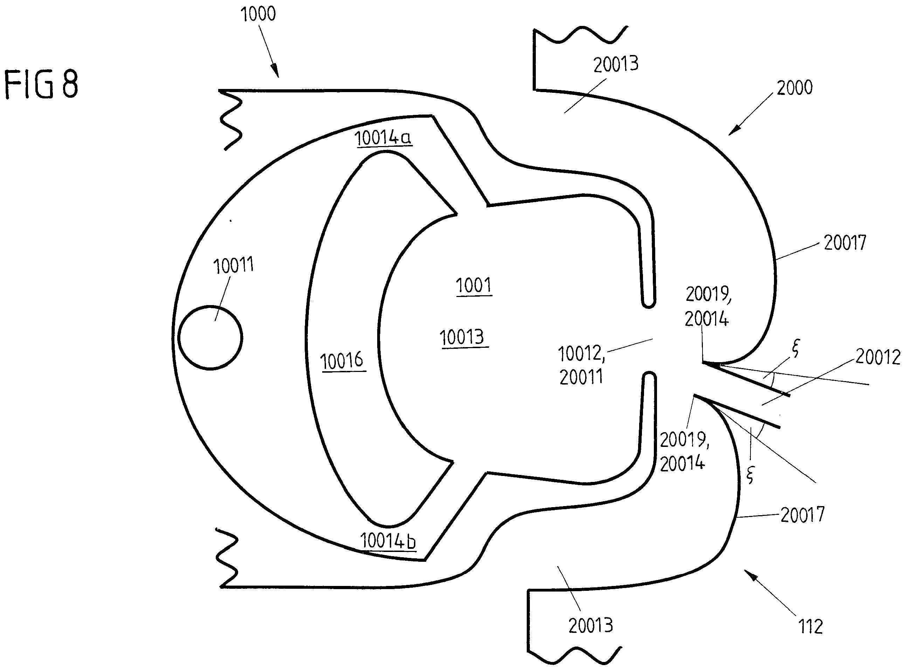

In Figur 8 ist eine Schnittdarstellung eines fluidischen Bauteils 112 gemäß einer weiteren Ausführungsform dargestellt. Dieses fluidische Bauteil 112 umfasst ein anderes erstes Teilsystem 1000 als die Ausführungsformen der vorherigen Figuren. Bei dem ersten Teilsystem 1000 aus Figur 8 wird das Mittel zur Ausbildung einer Oszillation durch zwei Nebenstromkanäle 10014a, 10014b gebildet, die direkt mit der Einlassöffnung 10011 verbunden und durch einen inneren Block 10016 voneinander getrennt sind. Diese Nebenstromkanäle 10014a, 10014b erzeugen zwei separate Fluidstrahlen, die durch die Form der Nebenstromkanäle 10014a, 10014b so ausgerichtet werden, dass sie in der Strömungskammer 1001 zusammentreffen und dort einen oszillierenden Fluidstrahl erzeugen, der an der Auslassöffnung 10012 der Strömungskammer 1001 aus der Strömungskammer 1001 austritt. Prinzipiell sind die verschiedenen ersten Teilsysteme 1000 der unterschiedlichen Ausführungsformen untereinander austauschbar.

Das zweite Teilsystem 2000 ähnelt dem zweiten Teilsystem 2000 aus Figur 7, unterscheidet sich von letzterem insbesondere darin, dass die zweite Begrenzungswand 20017 (die auch den Strömungsteiler bildet) nicht stetig mit einer Unterbrechung (für die Ausbildung der ersten kanalförmigen Auslassöffnung 20012) ist, sondern dass die zweite Begrenzungswand 20017 zwei gekrümmte Flächen aufweist, die jeweils (aus Sicht des Fluidstroms) nach außen gewölbt sind, und zwischen denen die erste kanalförmige Auslassöffnung 20012 ausgebildet ist. An ihrem stromaufwärtigen Ende schließt die erste kanalförmige Auslassöffnung 20012 mit den gekrümmten Flächen der zweiten Begrenzungswand 20017 jeweils einen Winkel ξ ein, der in dieser Ausführungsform sehr spitz ist. Dadurch wird an dem stromaufwärtigen Ende der ersten kanalförmigen Auslassöffnung 20012 mit den gekrümmten Flächen der zweiten Begrenzungswand 20017 jeweils eine scharfe Kante 20019 ausgebildet. Durch diese Kante 20019 wird wie bereits im Zusammenhang mit Figur 7 erläutert, zum einen der Anstieg des Pulses und zum anderen die Pulsbreite b beeinflusst. So sollte der Winkel ξ, der durch die erste kanalförmige Auslassöffnung 20012 und die zweite Begrenzungswand 20017 definiert wird, kleiner als 95° sein, vorzugsweise kleiner als 70° und insbesondere bevorzugt kleiner als 45° sein. Die Kante 20019 bildet einen Strömungsteiler 20014.

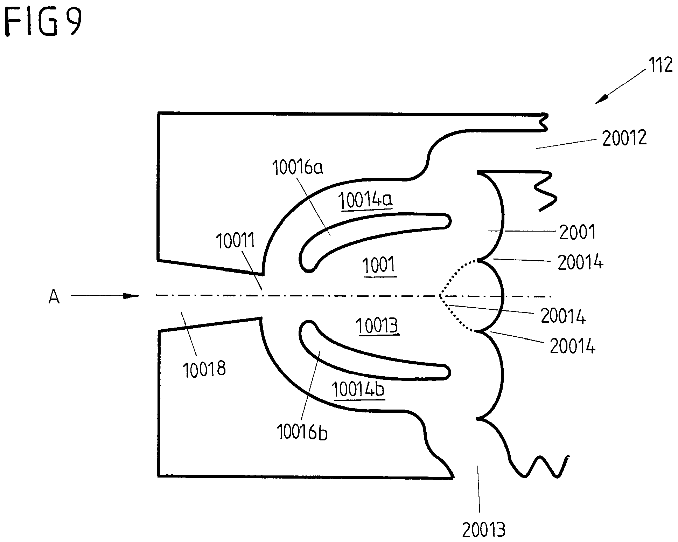

Figur 9 zeigt eine weitere Ausführungsform für das fluidische Bauteil 112, wieder in einer Schnittdarstellung. Hier wird der Fluidstrom durch mehrere Strömungsteiler 20014 aufgeteilt, die in die Strömungskammer 1001 des ersten Teilsystems 1000 hineinragen. Dabei sind unterschiedliche Anordnungen und Formen der Strömungsteiler 20014 möglich, wie durch die gestrichelte Linie in Figur 9 beispielhaft dargestellt.

In den einzelnen Figuren 1-9 sind verschiedene Ausführungsformen des ersten Teilsystems 1000 und verschiedene Ausführungsformen des zweiten Teilsystems 2000 in einer konkreten Kombination dargestellt. Jedoch können die ersten und zweiten Teilsysteme 1000, 2000 untereinander ausgetauscht werden, so dass beliebige Kombinationen des ersten Teilsystems 1000 mit dem zweiten Teilsystem möglich sind. Die Formen des ersten Teilsystems, die in den Figuren 1 bis 9 gezeigt werden, sind nur beispielhaft. Alternativ können auch fluidische Oszillatoren eingesetzt werden, die mittels kollidierender Fluidstrahlen oder durch interagierende Wirbel beziehungsweise Rezirkulationsgebiete eine Oszillation erzeugen oder die andere Mittel zur Ausbildung einer Oszillation des Fluidstroms haben als Nebenstromkanäle (feedbackfreie fluidische Bauteile).

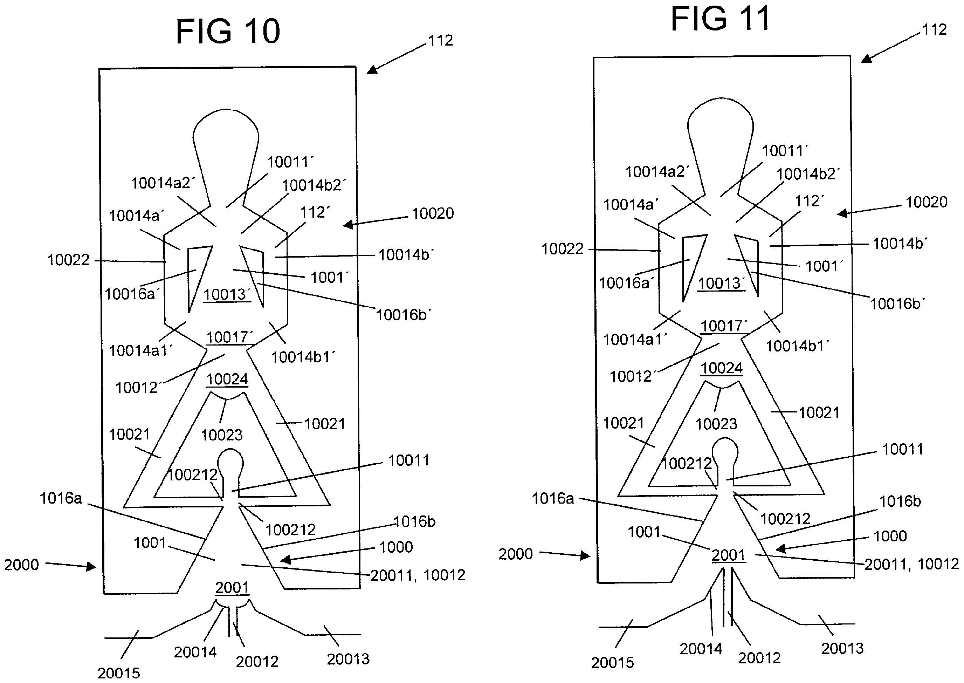

In Figur 10 ist eine Schnittdarstellung durch ein fluidisches Bauteil 112 gemäß einer weiteren Ausführungsform dargestellt. Das fluidische Bauteil 112 aus Figur 10 unterscheidet sich von dem fluidischen Bauteil 112 aus Figur 2 insbesondere in der Ausgestaltung des Mittels zur Ausbildung einer Oszillation des Fluidstroms. Während in der Ausführungsform aus Figur 2 zwei Nebenstromkanäle 10014a, 10014b vorgesehen sind, die mit dem Hauptstromkanal 10013 der Strömungskammer 1001 fluidisch verbunden sind, umfasst in der Ausführungsform aus Figur 10 das Mittel 10020 zur Ausbildung einer Oszillation des Fluidstroms eine Vorrichtung 10022 zur Bereitstellung eines Hilfsfluidstroms und zwei Zuführleitungen 10021, die die Vorrichtung 10022 und die Strömungskammer 1001 des fluidischen Bauteils 112 fluidisch miteinander verbinden, wobei die Vorrichtung 10022 stromaufwärts der Strömungskammer 1001 des fluidischen Bauteils 112 angeordnet ist.

Die Vorrichtung 10022 zur Bereitstellung eines Hilfsfluidstroms umfasst ein zweites fluidisches Bauteil 112`, welches hinsichtlich Aufbau und Funktion im Wesentlichen dem fluidischen Bauteil 112 aus Figur 2 entspricht. Das zweite fluidische Bauteil 112' weist eine Strömungskammer 1001' auf, die von einem Hilfsfluidstrom durchströmbar ist, der durch eine Einlassöffnung 10011' der Strömungskammer 1001' in die Strömungskammer 1001' eintritt und durch eine Auslassöffnung 10012` der Strömungskammer 1001' aus der Strömungskammer 1001' austritt. Die Strömungskammer 1001' verbreitert sich stromabwärts (in der Oszillationsebene) und geht in einen sich (in der Oszillationsebene) verjüngenden Auslasskanal 10017` über, der in der Auslassöffnung 10012' endet. Das zweite fluidische Bauteil 112' weist zudem als Mittel 10014a', 10014b' zur Ausbildung einer Oszillation des Hilfsfluidstroms an der Auslassöffnung 10012` zwei Nebenstromkanäle 10014a', 10014b' auf, die jeweils über einen Eingang 10014a1', 10014b1' und einen Ausgang 10014a2`, 10014b2' mit einem Hauptstromkanal 10013' der Strömungskammer 1001' fluidisch verbunden sind und die sich jeweils zwischen dem entsprechenden Eingang 10014a1', 10014b1' und dem entsprechenden Ausgang 10014a2`, 10014b2` erstrecken. Die Form der inneren Blöcke 10016a', 10016b`, die die Nebenstromkanäle 10014a`, 10014b' von dem Hauptstromkanal 10013' abtrennen, ist in Figur 10 nur beispielhaft (in der Oszillationsebene mit einem dreieckigen Querschnitt) gezeigt und kann beliebig anders, beispielsweise wie in den Figuren 2, 4-9 gezeigt, gestaltet sein.

An der Auslassöffnung 10012` des zweiten fluidischen Bauteils 112` tritt ein oszillierender Hilfsfluidstrom aus, der auf einen stromabwärts dieser Auslassöffnung 10012' angeordneten zweiten Strömungsteiler 10023 einer zweiten Separationskammer 10024 trifft. Die zweite Separationskammer 10024 ist Teil des Mittels 10020 zur Ausbildung einer Oszillation des Fluidstroms. Der zweite Strömungsteiler 10023 lenkt den aus der Auslassöffnung 10012` des zweiten fluidischen Bauteils 112' austretenden und in die zweite Separationskammer 10024 eintretenden oszillierenden Hilfsfluidstrom in die zwei Zuführleitungen 10021. Die Zuführleitungen (insbesondere deren stromaufwärtige Enden) sind diesseits und jenseits des zweiten Strömungsteilers 10023 in der Oszillationsebene des Hilfsfluidstroms angeordnet. Somit strömt der Hilfsfluidstrom abwechselnd in die eine oder andere Zuführleitung 10021. Somit können die Zuführleitungen 10021 phasenverschoben den Hilfsfluidstrom der Strömungskammer 1001 des fluidischen Bauteils 112 bereitstellen. Der zweite Strömungsteiler 10023 weist eine in Fluidstromrichtung betrachtet konkave Form auf. Andere Formen sind möglich.

Die Zuführleitungen 10021 erstrecken sich ausgehend von dem zweiten Strömungsteiler 10023 stromabwärts zunächst in divergierende Richtungen (1. Abschnitt) und anschließend jeweils in Richtung der Strömungskammer 1001 des fluidischen Bauteils 112 (2. Abschnitt). Die 1. Abschnitte (insbesondere deren stromaufwärtige Enden) sind dabei in der Oszillationsebene des aus dem zweiten fluidischen Bauteil 112` austretenden oszillierenden Hilfsfluidstroms angeordnet. Zwischen dem 1. und 2. Abschnitt können weitere Abschnitte vorgesehen sein. Die Strömungskammer 1001 des fluidischen Bauteils 112 ist zwischen den stromabwärtigen Enden 100212 der Zuführleitungen 10021 angeordnet. Zwischen der Einlassöffnung 10011, an der der Fluidstrom in die Strömungskammer 1001 eintritt, und der Auslassöffnung 10012, an der der oszillierende Fluidstrom aus der Strömungskammer 1001 austritt, weist die Strömungskammer 1001 des fluidischen Bauteils 112 seitliche Öffnungen auf, über die die Strömungskammer 1001 mit den stromabwärtigen Enden 100212 der Zuführleitungen 10021 fluidisch verbunden ist. In der Ausführungsform der Figur 10 befinden sich die stromabwärtigen Enden 100212 der Zuführleitungen 10021 auf gleicher Höhe in Fluidstromrichtung betrachtet. Alternativ können sie sich auf unterschiedlicher Höhe befinden. Ferner erstrecken sich die 2. Abschnitte der Zuführleitungen 10021 in einer Ebene, welche der Oszillationsebene des Hilfsfluidstroms beziehungsweise der Erstreckungsebene der 1. Abschnitte entspricht. Alternativ können sich die 2. Abschnitte der Zuführleitungen 10021 in unterschiedlichen Ebenen und/oder in einer von der Erstreckungsebene der 1. Abschnitte unterschiedlichen Ebene erstrecken. Zudem erstrecken sich die 2. Abschnitte der Zuführleitungen 10021 direkt aufeinander zu, so dass sie mit der Fluidstromrichtung in der Strömungskammer 1001 des fluidischen Bauteils 112 jeweils einen Winkel von im Wesentlichen 90° einschließen. Alternativ kann dieser Winkel größer als 0° und kleiner als 180° sein. Dabei kann der Winkel, den der 2. Abschnitt der einen Zuführleitung 10021 mit der Fluidstromrichtung in der Strömungskammer 1001 des fluidischen Bauteils 112 einschließt von dem Winkel abweichen, den der 2. Abschnitt der anderen Zuführleitung 10021 mit der Fluidstromrichtung in der Strömungskammer 1001 des fluidischen Bauteils 112 einschließt, so dass sich die 2. Abschnitte der Zuführleitungen nicht zwingend direkt aufeinander zu erstrecken müssen. In jedem Fall trifft der Hilfsfluidstrom mit einer seitlichen Komponente auf den in der Strömungskammer 1001 des fluidischen Bauteils strömenden Fluidstroms, so dass der Hilfsfluidstrom den Fluidstrom seitlich ablenkt. Da der Hilfsfluidstrom abwechselnd aus der einen beziehungsweise anderen Zuführleitung 10021 austritt, erfolgt die seitliche Ablenkung abwechselnd von der einen beziehungsweise anderen Seite, so dass der Fluidstrom eine Oszillationsbewegung ausführt. Die Oszillationsbewegung erfolgt in der Ebene, die durch die 2. Abschnitte der Zuführleitungen 10021 vorgegeben ist. Durch die Oszillationsbewegung legt sich der Fluidstrom wechselseitig an die sich gegenüberliegenden Seitenwände 1016a, 1016b der Strömungskammer 1001 an, in denen jeweils eine Öffnung vorgesehen ist, über die die Strömungskammer 1001 mit einer Zuführleitung 10021 fluidisch verbunden ist. Die Strömungskammer 1001 weitet sich stromabwärts, das heißt ihre Ausdehnung quer zur Fluidstromrichtung und in der Oszillationsebene nimmt von der Einlassöffnung 10011 zur Auslassöffnung 10012 (beispielsweise stetig) zu.

Wie bereits für die Ausführungsform der Figur 2 beschrieben, tritt der oszillierende Fluidstrom aus der Auslassöffnung 10012 des fluidischen Bauteils 112 aus und in die Separationskammer 2001 der Separationsvorrichtung ein. Ein Strömungsteiler 20014 verteilt den oszillierenden Fluidstrom zeitlich versetzt in drei Auslassöffnungen 20012, 20013, 20015 der Separationskammer 2001. Der Strömungsteiler 20014 weist in Fluidstromrichtung betrachtet eine konkav gewölbte Form auf. Die Separationsvorrichtung ist derart ausgebildet, dass der Teil des oszillierenden Fluidstroms, der in die erste Auslassöffnung 20012 der Separationskammer 2001 gelenkt wird, der Teil des oszillierenden Fluidstroms, der in die zweite Auslassöffnung 20013 der Separationskammer 2001 gelenkt wird, und der Teil des oszillierenden Fluidstroms, der in die dritte Auslassöffnung 20015 der Separationskammer 2001 gelenkt wird, stromabwärts des Strömungsteilers 20014 nicht wieder zusammengeführt werden. Alternativ ist es ausreichend, wenn der Teil des oszillierenden Fluidstroms, der in die erste Auslassöffnung 20012 der Separationskammer 2001 gelenkt wird, stromabwärts des Strömungsteilers 20014 nicht mit dem restlichen Fluidstrom, der in die zwei anderen Auslassöffnungen 20013, 20015 gelenkt wird, zusammengeführt wird. Die erste Auslassöffnung 20012 weist quer zur Fluidstromrichtung eine kleinere Querschnittsfläche auf als die beiden anderen Auslassöffnungen 20013, 20015, und insbesondere eine kleinere Ausdehnung in der Oszillationsebene und quer zur Fluidstromrichtung (in der jeweiligen Auslassöffnung). Die erste Auslassöffnung 20012 der Separationskammer 2001 liegt (im Wesentlichen) auf der Achse, die die Einlassöffnung 10011 und die Auslassöffnung 10012 des fluidischen Bauteils 112 miteinander verbindet. Diese Achse kann beispielsweise mittig zwischen den maximalen Auslenkungen des oszillierenden Fluidstroms liegen. Der Teil des oszillierenden Fluidstroms, der aus der ersten Auslassöffnung 20012 der Separationskammer 2001 austritt, entspricht dem Nutzsignal. Mit der Form der Separationskammer 2001, insbesondere des Strömungsteilers 20014, und mit der relativen Querschnittsflächengröße der ersten Auslassöffnung 20012 quer zur Fluidstromrichtung (in Bezug auf die entsprechende Größe der Einlassöffnung 10011, der zweiten Auslassöffnung 20013 und der dritten Auslassöffnung 20015), kann der zeitliche Verlauf des Nutzsignals beeinflusst werden (Pulsabstand T, Pulsbreite t). Die Anzahl der Auslassöffnungen 20012, 20013, 20015 der Separationskammer 2001 ist in Figur 10 beispielhaft und kann von 3 abweichen.

Während über die Oszillationsfrequenz des zweiten fluidischen Bauteils 112', die auch die Oszillationsfrequenz des fluidischen Bauteils 112 vorgibt, der Pulsabstand T des aus der Separationsvorrichtung 2000 als Nutzsignal austretenden Fluidstrompulses beeinflusst werden kann, kann über den Eingangsdruck an der Einlassöffnung 10011 des fluidischen Bauteils 112 dessen Signalintensität gesteuert werden. Eine Änderung der Oszillationsfrequenz / des Pulsabstands T wirkt sich somit nicht maßgeblich auf die Signalintensität aus.

Der in die Einlassöffnung 10011' des zweiten fluidischen Bauteils 112' einströmende Hilfsfluidstrom wird von einer Hilfsfluidstromquelle bereitgestellt, während der in die Einlassöffnung 10011 des fluidischen Bauteils 112 einströmende Fluidstrom von einer Fluidstromquelle bereitgestellt wird. Die Fluidstromquelle und die Hilfsfluidstromquelle können voneinander verschiedene Quellen sein. Alternativ können sie aus einer gemeinsamen Quelle stammen. Insbesondere können Fluidstromquelle und die Hilfsfluidstromquelle Ströme mit unterschiedlichem/rAusgangsdruck, Fließgeschwindigkeit bereitstellen. Die Fluidstromquelle und die Hilfsfluidstromquelle können als Fluid jeweils ein Gas bereitstellen.

In Figur 11 ist eine Schnittdarstellung durch ein fluidisches Bauteil 112 gemäß einer weiteren Ausführungsform dargestellt. Das fluidische Bauteil 112 aus Figur 11 unterscheidet sich von dem fluidischen Bauteil 112 aus Figur 10 insbesondere in der Ausgestaltung des Strömungsteilers 20014 der Separationskammer 2001 stromabwärts der Auslassöffnung 10012 des fluidischen Bauteils 112. In dieser Ausführungsform ragt der Strömungsteiler 20014 spitz in die Separationskammer 2001 hinein. Durch die scharfkantige Einlassgeometrie der ersten Auslassöffnung 20012 (das heißt durch die Form des Strömungsteilers 20014 im Bereich der ersten Auslassöffnung 20012) kann die vordere und die rückwärtige Flanke eines Pulses und somit die Pulsbreite b des Nutzsignals beeinflusst werden. Je scharfkantiger die Einlassgeometrie der ersten Auslassöffnung 20012 ist, desto steiler ist die Flanke des Pulses des Nutzsignals, sofern keine sekundären Strömungseffekte durch die Form der Einlassgeometrie der ersten Auslassöffnung 20012 provoziert werden.

## Patentansprüche

1. Fluidisches Bauteil (112) zur Erzeugung eines Ultraschallsignals mit einer Strömungskammer (1001), die von einem Fluidstrom durchströmbar ist, der durch eine Einlassöffnung (10011) der Strömungskammer (1001) in die Strömungskammer (1001) eintritt und durch eine Auslassöffnung (10012) der Strömungskammer (1001) aus der Strömungskammer (1001) austritt, wobei das fluidische Bauteil (112) mindestens ein Mittel (10014a, 10014b, 10020) zur Ausbildung einer Oszillation des Fluidstroms an der Auslassöffnung (10012) aufweist, das mindestens zwei Nebenstromkanäle (10014a, 10014b) umfasst, die jeweils über einen Eingang (10014a1, 10014b1) und einen Ausgang (10014a2, 10014b2) mit einem Hauptstromkanal (10013) der Strömungskammer (1001) fluidisch verbunden sind und die sich jeweils zwischen dem entsprechenden Eingang (10014a1, 10014b1) und dem entsprechenden Ausgang (10014a2, 10014b2) erstrecken, wobei die Oszillation in einer Oszillationsebene erfolgt,
wobei das fluidische Bauteil zudem
eine Separationsvorrichtung (2000) aufweist, die ausgebildet ist, aus dem oszillierenden Fluidstrom einen Teil abzutrennen, wobei die Separationsvorrichtung (2000) eine Einlassöffnung (20011), durch die der oszillierende Fluidstrom in die Separationsvorrichtung (2000) eintritt, und mindestens eine erste Auslassöffnung (20012) und mindestens eine zweite Auslassöffnung (20013), durch die jeweils ein Teil des oszillierenden Fluidstroms austritt, umfasst, wobei zwischen der mindestens einen ersten Auslassöffnung (20012) der Separationsvorrichtung (2000) und der mindestens einen zweiten Auslassöffnung (20013) der Separationsvorrichtung (2000) ein Strömungsteiler (20014) vorgesehen ist, der den oszillierenden Fluidstrom wechselseitig in die mindestens eine erste und mindestens eine zweite Auslassöffnung (20012, 20013) der Separationsvorrichtung (2000) lenkt, wobei die Separationsvorrichtung (2000) derart ausgebildet ist, dass der Teil des oszillierenden Fluidstroms, der in die mindestens eine erste Auslassöffnung (20012) der Separationsvorrichtung (2000) gelenkt wird, und der Teil des oszillierenden Fluidstroms, der in die mindestens eine zweite Auslassöffnung (20013) der Separationsvorrichtung gelenkt wird, stromabwärts des Strömungsteilers (20014) nicht wieder zusammengeführt werden, und wobei die mindestens eine erste Auslassöffnung (20012) und die mindestens eine zweite Auslassöffnung (20013) der Separationsvorrichtung (2000) eine unterschiedlich große Ausdehnung in der Oszillationsebene und quer zur Fluidstromrichtung aufweisen.

2. Fluidisches Bauteil (112) nach Anspruch 1, **dadurch gekennzeichnet, dass** die Separationsvorrichtung (2000) derart ausgebildet ist, dass der Teil des Fluidstroms, der aus der mindestens einen ersten Auslassöffnung (20012) der Separationsvorrichtung (2000) austritt, und der Teil des Fluidstroms, der aus der mindestens einen zweiten Auslassöffnung (20013) der Separationsvorrichtung (2000) austritt, jeweils entlang einer Achse (R₁, R₂) gerichtet ist, wobei die Achsen (R₁, R₂) in Fluidstromrichtung auseinanderlaufen.

3. Fluidisches Bauteil (112) nach Anspruch 1 oder 2, **dadurch gekennzeichnet, dass** die mindestens eine erste Auslassöffnung (20012) der Separationsvorrichtung (2000) und die Einlassöffnung (20011) der Separationsvorrichtung (2000) jeweils eine Ausdehnung in der Oszillationsebene und quer zur Fluidstromrichtung aufweisen, wobei die besagte Ausdehnung der mindestens einen ersten Auslassöffnung (20012) der Separationsvorrichtung (2000) kleiner als oder gleich 150% der besagten Ausdehnung der Einlassöffnung (20011) der Separationsvorrichtung (2000) ist, vorzugsweise kleiner als oder gleich der besagten Ausdehnung der Einlassöffnung (20011) der Separationsvorrichtung (2000), insbesondere bevorzugt kleiner als oder gleich 75% der besagten Ausdehnung der Einlassöffnung (20011) der Separationsvorrichtung (2000).

4. Fluidisches Bauteil (112) nach einem der vorherigen Ansprüche, **dadurch gekennzeichnet, dass** die mindestens eine erste Auslassöffnung (20012) der Separationsvorrichtung (2000) eine kleinere Querschnittsfläche quer zur Fluidstromrichtung aufweist als die Einlassöffnung (20011) der Separationsvorrichtung (2000).

5. Fluidisches Bauteil (112) nach einem der vorherigen Ansprüche, **dadurch gekennzeichnet, dass** die Separationsvorrichtung (2000) stromabwärts der Auslassöffnung (10012) der Strömungskammer (1001) angeordnet ist, insbesondere dass die Auslassöffnung (10012) der Strömungskammer (1001) der Einlassöffnung (20011) der Separationsvorrichtung (2000) entspricht.

6. Fluidisches Bauteil (112) nach einem der vorherigen Ansprüche, **dadurch gekennzeichnet, dass** der Strömungsteiler (20014) mindestens eine gekrümmte Wand umfasst, die in Fluidstromrichtung betrachtet nach außen gewölbt ist, und/oder dass der Strömungsteiler (20014) und eine an den Strömungsteiler angrenzende, die mindestens eine erste Auslassöffnung (20012) der Separationsvorrichtung (2000) begrenzende Wand einen Winkel (ξ) einschließen, der kleiner als 95°, vorzugsweise kleiner als 70°, insbesondere bevorzugt kleiner als 45° ist.

7. Fluidisches Bauteil (112) nach einem der vorherigen Ansprüche, **dadurch gekennzeichnet, dass** die Strömungskammer (1001) eine Ausdehnung senkrecht zur Oszillationsebene aufweist, wobei diese Ausdehnung veränderlich ist,
und/oder dass die mindestens eine erste Auslassöffnung (20012) der Separationsvorrichtung (2000) in ihrer Position, Form und/oder Größe veränderlich ist.

8. Fluidisches Bauteil (112) nach einem der vorherigen Ansprüche, **dadurch gekennzeichnet, dass** die mindestens zwei Nebenstromkanäle (10014a, 10014b) eine unterschiedliche Länge aufweisen, wobei insbesondere ein erster der mindestens zwei Nebenstromkanäle (10014a, 10014b) mindestens doppelt so lang ist wie ein zweiter der mindestens zwei Nebenstromkanäle (10014a, 10014b), vorzugsweise mindestens fünf Mal so lang.

9. Fluidisches Bauteil (112) nach einem der vorherigen Ansprüche, **dadurch gekennzeichnet, dass** die mindestens eine erste Auslassöffnung (20012) der Separationsvorrichtung (2000) vorgesehen ist, um einen Teil des oszillierenden Fluidstroms als Ultraschallsignal abzugeben, während die mindestens eine zweite Auslassöffnung (20013) der Separationsvorrichtung (2000) vorgesehen ist, um einen Rest des Fluidstroms abzugeben,
und/oder dass im Bereich der mindestens einen zweiten Auslassöffnung (20013) der Separationsvorrichtung (2000) eine Vorrichtung zur Schalldämpfung vorgesehen ist.

10. Fluidisches Bauteil (112) nach einem der vorherigen Ansprüche, **dadurch gekennzeichnet, dass** das fluidische Bauteil (112) ausgebildet ist, ein Ultraschallsignal (S) zu erzeugen, das Pulse umfasst, die einen zeitlichen Pulsabstand (T) zueinander und jeweils eine Halbwertsbreite (b) aufweisen, wobei der Pulsabstand (T) größer oder gleich der doppelten Halbwertsbreite (b), insbesondere größer oder gleich der zehnfachen Halbwertsbreite (b), insbesondere bevorzugt größer oder gleich der hundertfachen Halbwertsbreite (b) ist.

11. Fluidisches Bauteil (112) nach einem der Ansprüche 1 bis 7 und 9 bis 10, **dadurch gekennzeichnet, dass** das Mittel (10020) zur Ausbildung einer Oszillation des Fluidstroms eine Vorrichtung (10022) zur Bereitstellung eines Hilfsfluidstroms und mindestens eine Zuführleitung (10021) umfasst, die fluidisch einerseits mit der Vorrichtung (10022) und andererseits mit der Strömungskammer (1001) des fluidischen Bauteils (112) verbunden ist, um der Strömungskammer (1001) den Hilfsfluidstrom zuzuführen, wobei die mindestens eine Zuführleitung (10021) derart bezüglich der Strömungskammer (1001) angeordnet ist, dass der Hilfsfluidstrom in einem Winkel ungleich 0° zu dem von der Einlassöffnung (10011) zur Auslassöffnung (10012) strömenden Fluidstrom in die Strömungskammer (1001) eintritt, und dass der Hilfsfluidstrom von der Vorrichtung (10022) als oszillierender Hilfsfluidstrom bereitgestellt wird, so dass die mindestens eine Zuführleitung (10021) den Hilfsfluidstrom zeitlich veränderlich der Strömungskammer (1001) des fluidischen Bauteils (112) zuführt.

12. Fluidisches Bauteil (112) nach Anspruch 11, **dadurch gekennzeichnet, dass** die Vorrichtung (10022) zur Bereitstellung eines Hilfsfluidstroms ein zweites fluidisches Bauteil (112') umfasst, das eine Strömungskammer (1001 ') umfasst, die von dem Hilfsfluidstrom durchströmbar ist, der durch eine Einlassöffnung (10011') der Strömungskammer (1001') in die Strömungskammer (1001 `) eintritt und durch eine Auslassöffnung (10012') der Strömungskammer (1001') aus der Strömungskammer (1001') austritt, wobei das zweite fluidische Bauteil (112') mindestens ein Mittel (10014a', 10014b') zur Ausbildung einer Oszillation des Hilfsfluidstroms an der Auslassöffnung (10012') aufweist, wobei die Oszillation in einer Oszillationsebene erfolgt, wobei das mindestens eine Mittel (10014a', 10014b') zur Ausbildung einer Oszillation des Hilfsfluidstroms insbesondere einen Nebenstromkanal (10014a', 10014b') umfasst, der über einen Eingang (10014a1', 10014b1`) und einen Ausgang (10014a2', 10014b2`) mit einem Hauptstromkanal (10013`) der Strömungskammer (1001') fluidisch verbunden ist und sich zwischen dem Eingang (10014a1', 10014b1`) und dem Ausgang (10014a2`, 10014b2`) erstreckt,
und/oder dass das Mittel (10020) zur Ausbildung einer Oszillation des Fluidstroms zwei Zuführleitungen (10021) umfasst, die auf gegenüberliegenden Seiten der Strömungskammer (1001) des fluidischen Bauteils (112) jeweils fluidisch mit der Strömungskammer (1001) verbunden sind, wobei insbesondere stromabwärts der Vorrichtung (10022) zur Bereitstellung eines Hilfsfluidstroms ein zweiter Strömungsteiler (10023) vorgesehen ist, der den aus der Vorrichtung (10022) austretenden oszillierenden Hilfsfluidstrom wechselseitig in die zwei Zuführleitungen (10021) lenkt, wobei insbesondere die zwei Zuführleitungen (10021) zeitlich versetzt von dem Hilfsfluidstrom durchströmt werden.

13. Fluidisches Bauteil (112) nach einem der vorherigen Ansprüche, **dadurch gekennzeichnet, dass** die Separationsvorrichtung (2000) mindestens eine erste Auslassöffnung (20012), mindestens eine zweite Auslassöffnung (20013) und mindestens eine dritte Auslassöffnung (20015), durch die jeweils ein Teil des oszillierenden Fluidstroms austritt, umfasst, wobei zwischen der mindestens einen ersten Auslassöffnung (20012) der Separationsvorrichtung (2000), der mindestens einen zweiten Auslassöffnung (20013) der Separationsvorrichtung (2000) und der mindestens einen dritten Auslassöffnung (20015) der Separationsvorrichtung (2000) ein Strömungsteiler (20014) vorgesehen ist, der den oszillierenden Fluidstrom wechselseitig in die mindestens eine erste, zweite und dritte Auslassöffnung (20012, 20013, 20015) der Separationsvorrichtung (2000) lenkt, wobei eine der Auslassöffnungen (20012) auf einer Achse liegt, die sich im Wesentlichen mittig zwischen den maximalen Auslenkungen des oszillierenden Fluidstroms erstreckt, und eine kleinere Querschnittsfläche aufweist als die übrigen Auslassöffnungen (20013, 20015) der Separationsvorrichtung (2000).

14. Vorrichtung (11) zur Erzeugung eines Ultraschallsignals (S), **dadurch gekennzeichnet, dass** die Vorrichtung (11) ein fluidisches Bauteil (112) zur Erzeugung eines Ultraschallsignals (S) nach einem der Ansprüche 1 bis 13 und eine Fluidstromquelle (111) zur Bereitstellung eines Fluidstroms umfasst, wobei die Fluidstromquelle (111) fluidisch mit der Einlassöffnung (10011) der Strömungskammer (1001) des fluidischen Bauteils (112) verbunden ist, wobei die Fluidstromquelle (111) insbesondere eine Gasstromquelle ist,
oder dass die Vorrichtung (11) ein fluidisches Bauteil (112) zur Erzeugung eines Ultraschallsignals (S) nach einem der Ansprüche 12 und 13, eine Fluidstromquelle (111) und eine Hilfsfluidstromquelle (111') zur Bereitstellung des Fluidstroms beziehungsweise des Hilfsfluidstroms umfasst, wobei die Fluidstromquelle (111) fluidisch mit der Einlassöffnung (10011) der Strömungskammer (1001) des fluidischen Bauteils (112) verbunden ist und die Hilfsfluidstromquelle (111') mit der Einlassöffnung (10011') der Strömungskammer (1001') der Vorrichtung (10022) zur Bereitstellung eines Hilfsfluidstroms, wobei die Fluidstromquelle (111) und die Hilfsfluidstromquelle (111') insbesondere jeweils eine Gasstromquelle sind.

15. Ultraschallmessvorrichtung (1) mit einer Vorrichtung (11) zur Erzeugung eines Ultraschallsignals (S), einer Vorrichtung (12) zum Empfangen eines Ultraschallsignals (S, S'), und einer Signalverarbeitungseinheit (13) zur Verarbeitung des empfangenen Ultraschallsignals (S, S'),
**dadurch gekennzeichnet,**
**dass** die Vorrichtung (11) zur Erzeugung eines Ultraschallsignals (S) ein fluidisches Bauteil (112) nach einem der Ansprüche 1 bis 13 umfasst, wobei die Vorrichtung (12) zum Empfangen eines Ultraschallsignals (S,S') insbesondere ausgebildet ist, ein von der Vorrichtung (11) zur Erzeugung eines Ultraschallsignals (S) ausgesandtes und außerhalb der Ultraschallmessvorrichtung reflektiertes Ultraschallsignal (S`) und ein Referenzsignal zu empfangen, wobei das Referenzsignal durch den aus der mindestens einen zweiten Auslassöffnung (20013) der Separationsvorrichtung (2000) austretenden Fluidstrom bereitgestellt wird.

## Claims

1. A fluidic component (112) for generating an ultrasonic signal, comprising a flow chamber (1001) that can be traversed by a fluid flow, which enters the flow chamber (1001) through an inlet opening (10011) of the flow chamber (1001) and exits from the flow chamber (1001) through an outlet opening (10012) of the flow chamber (1001), wherein the fluidic component (112) includes at least one means (10014a, 10014b, 10020) for forming an oscillation of the fluid flow at the outlet opening (10012), which comprises two secondary flow channels (10014a, 10014b) that each are fluidically connected to a main flow channel (10013) of the flow chamber (1001) via an inlet (10014a1, 10014b1) and an outlet (10014a2, 10014b2) and each extend between the corresponding inlet (10014a1, 10014b1) and the corresponding outlet (10014a2, 10014b2), wherein the oscillation is effected in an oscillation plane,
wherein the fluidic component also includes a separation device (2000) that is configured to separate a part from the oscillating fluid flow, wherein the separation device (2000) comprises an inlet opening (20011), through which the oscillating fluid flow enters the separation device (2000), and at least one first outlet opening (20012) and at least one second outlet opening (20013), through each of which a part of the oscillating fluid flow exits, wherein between the at least one first outlet opening (20012) of the separation device (2000) and the at least one second outlet opening (20013) of the separation device (2000) a flow divider (20014) is provided, which alternately directs the oscillating fluid flow into the at least one first and at least one second outlet opening (20012, 20013) of the separation device (2000), wherein the separation device (2000) is configured in such a way that the part of the oscillating fluid flow which is directed into the at least one first outlet opening (20012) of the separation device (2000) and the part of the oscillating fluid flow which is directed into the at least one second outlet opening (20013) of the separation device, are not joined again downstream of the flow divider (20014), and wherein the at least one first outlet opening (20012) and the at least one second outlet opening (20013) of the separation device (2000) have a differently large expansion in the oscillation plane and transversely to the fluid flow direction.

2. The fluidic component (112) according to claim 1, **characterized in that** the separation device (2000) is configured in such a way that the part of the fluid flow that exits from the at least one first outlet opening (20012) of the separation device (2000) and the part of the fluid flow that exits from the at least one second outlet opening (20013) of the separation device (2000) each are directed along an axis (R₁, R₂), wherein the axes (R₁, R₂) diverge in the fluid flow direction.

3. The fluidic component (112) according to claim 1 or 2, **characterized in that** the at least one first outlet opening (20012) of the separation device (2000) and the inlet opening (20011) of the separation device (2000) each have an expansion in the oscillation plane and transversely to the fluid flow direction, wherein said expansion of the at least one first outlet opening (20012) of the separation device (2000) is less than or equal to 150% of said expansion of the inlet opening (20011) of the separation device (2000), preferably less than or equal to said expansion of the inlet opening (20011) of the separation device (2000), in particular preferably less than or equal to 75% of said expansion of the inlet opening (20011) of the separation device (2000).

4. The fluidic component (112) according to any of the previous claims, **characterized in that** the at least one first outlet opening (20012) of the separation device (2000) has a smaller cross-sectional area transversely to the fluid flow direction than the inlet opening (20011) of the separation device (2000).

5. The fluidic component (112) according to any of the previous claims, **characterized in that** the separation device (2000) is arranged downstream of the outlet opening (10012) of the flow chamber (1001), in particular that the outlet opening (10012) of the flow chamber (1001) corresponds to the inlet opening (20011) of the separation device (2000).

6. The fluidic component (112) according to any of the previous claims, **characterized in that** the flow divider (20014) comprises at least one curved wall that is outwardly bulged as seen in the fluid flow direction,
and/or that the flow divider (20014) and a wall adjoining the flow divider and bordering the at least one first outlet opening (20012) of the separation device (2000) include an angle (ξ) that is less than 95°, preferably less than 70°, in particular preferably less than 45°.

7. The fluidic component (112) according to any of the previous claims, **characterized in that** the flow chamber (1001) has an expansion perpendicularly to the oscillation plane, wherein this expansion is variable,
and/or that the at least one first outlet opening (20012) of the separation device (2000) is variable in its position, shape and/or size.

8. The fluidic component (112) according to any of the previous claims, **characterized in that** the at least two secondary flow channels (10014a, 10014b) have different lengths, wherein in particular a first one of the at least two secondary flow channels (10014a, 10014b) is at least twice as long as a second one of the at least two secondary flow channels (10014a, 10014b), preferably at least five times as long.

9. The fluidic component (112) according to any of the previous claims, **characterized in that** the at least one first outlet opening (20012) of the separation device (2000) is provided to discharge a part of the oscillating fluid flow as an ultrasonic signal, while the at least one second outlet opening (20013) of the separation device (2000) is provided to discharge a rest of the fluid flow,
and/or that in the region of the at least one second outlet opening (20013) of the separation device (2000) a device for sound attenuation is provided.

10. The fluidic component (112) according to any of the previous claims, **characterized in that** the fluidic component (112) is configured to generate an ultrasonic signal (S) that comprises pulses which have a temporal pulse distance (T) to each other and each have a half-width (b), wherein the pulse distance (T) is greater than or equal to twice the half-width (b), in particular greater than or equal to ten times the half-width (b), in particular preferably greater than or equal to one hundred times the half-width (b).

11. The fluidic component (112) according to any of claims 1 to 7 and 9 to 10, **characterized in that** the means (10020) for forming an oscillation of the fluid flow comprises an apparatus (10022) for providing an auxiliary fluid flow and at least one supply line (10021), which is fluidically connected to the apparatus (10022) on the one hand and to the flow chamber (1001) of the fluidic component (112) on the other hand, in order to supply the auxiliary fluid flow to the flow chamber (1001), wherein the at least one supply line (10021) is arranged with respect to the flow chamber (1001) in such a way that the auxiliary fluid flow enters the flow chamber (1001) at an angle unequal to 0° relative to the fluid flow flowing from the inlet opening (10011) to the outlet opening (10012), and that the auxiliary fluid flow is provided by the apparatus (10022) as an oscillating auxiliary fluid flow so that the at least one supply line (10021) supplies the auxiliary fluid flow to the flow chamber (1001) of the fluidic component (112) in a temporally variable way.

12. The fluidic component (112) according to claim 11, **characterized in that** the apparatus (10022) for providing an auxiliary fluid flow comprises a second fluidic component (112') that comprises a flow chamber (1001') which can be traversed by the auxiliary fluid flow that enters the flow chamber (1001') through an inlet opening (10011') of the flow chamber (1001') and exits from the flow chamber (1001') through an outlet opening (10012') of the flow chamber (1001'), wherein the second fluidic component (112') includes at least one means (10014a', 10014b') for forming an oscillation of the auxiliary fluid flow at the outlet opening (10012'), wherein the oscillation is effected in an oscillation plane, wherein the at least one means (10014a', 10014b') for forming an oscillation of the auxiliary fluid flow in particular comprises a secondary flow channel (10014a', 10014b') that is fluidically connected to a main flow channel (10013') of the flow chamber (1001') via an inlet (10014a1', 10014b1') and an outlet (10014a2', 10014b2') and extends between the inlet (10014a1', 10014b1') and the outlet (10014a2', 10014b2'),
and/or that the means (10020) for forming an oscillation of the fluid flow comprises two supply lines (10021) which on opposite sides of the flow chamber (1001) of the fluidic component (112) are each fluidically connected to the flow chamber (1001), wherein in particular downstream of the apparatus (10022) for providing an auxiliary fluid flow a second flow divider (10023) is provided, which alternately directs the oscillating auxiliary fluid flow exiting from the apparatus (10022) into the two supply lines (10021), wherein in particular the two supply lines (10021) are traversed by the auxiliary fluid flow at staggered times.

13. The fluidic component (112) according to any of the previous claims, **characterized in that** the separation device (2000) comprises at least one first outlet opening (20012), at least one second outlet opening (20013) and at least one third outlet opening (20015), through each of which a part of the oscillating fluid flow exits, wherein between the at least one first outlet opening (20012) of the separation device (2000), the at least one second outlet opening (20013) of the separation device (2000) and the at least one third outlet opening (20015) of the separation device (2000) a flow divider (20014) is provided, which alternately directs the oscillating fluid flow into the at least one first, second and third outlet opening (20012, 20013, 20015) of the separation device (2000), wherein one of the outlet openings (20012) lies on an axis that extends substantially centrally between the maximum deflections of the oscillating fluid flow, and has a smaller cross-sectional area than the remaining outlet openings (20013, 20015) of the separation device (2000).

14. An apparatus (11) for generating an ultrasonic signal (S), **characterized in that** the apparatus (11) comprises a fluidic component (112) for generating an ultrasonic signal (S) according to any of claims 1 to 13 and a fluid flow source (111) for providing a fluid flow, wherein the fluid flow source (111) is fluidically connected to the inlet opening (10011) of the flow chamber (1001) of the fluidic component (112), wherein the fluid flow source (111) is in particular a gas flow source,
or that the apparatus (11) comprises a fluidic component (112) for generating an ultrasonic signal (S) according to any of claims 12 and 13, a fluid flow source (111) and an auxiliary fluid flow source (111') for providing the fluid flow and the auxiliary fluid flow, respectively, wherein the fluid flow source (111) is fluidically connected to the inlet opening (10011) of the flow chamber (1001) of the fluidic component (112) and the auxiliary fluid flow source (111') is fluidically connected to the inlet opening (10011') of the flow chamber (1001') of the apparatus (10022) for providing an auxiliary fluid flow, wherein the fluid flow source (111) and the auxiliary fluid flow source (111') are in particular each a gas flow source.

15. An ultrasonic measurement device (1) comprising an apparatus (11) for generating an ultrasonic signal (S), an apparatus (12) for receiving an ultrasonic signal (S, S') and a signal processing unit (13) for processing the received ultrasonic signal (S, S'),
**characterized in**
**that** the apparatus (11) for generating an ultrasonic signal (S) comprises a fluidic component (112) according to any of claims 1 to 13, wherein the apparatus (12) for receiving an ultrasonic signal (S, S') is in particular configured to receive an ultrasonic signal (S') emitted by the apparatus (11) for generating an ultrasonic signal (S) and reflected outside the ultrasonic measurement device and a reference signal, wherein the reference signal is provided by the fluid flow exiting from the at least one second outlet opening (20013) of the separation device (2000).

## Revendications

1. Composant fluidique (112) pour générer un signal ultrasonore, comportant une chambre d'écoulement (1001) qui peut être traversée par un courant de fluide, qui entre dans la chambre d'écoulement (1001) par une ouverture d'entrée (10011) de la chambre d'écoulement (1001) et qui sort de la chambre d'écoulement (1001) par une ouverture de sortie (10012) de la chambre d'écoulement (1001), le composant fluidique (112) comportant au moins un moyen (10014a, 10014b, 10020) pour former une oscillation du courant de fluide au niveau de l'ouverture de sortie (10012), qui comporte au moins deux canaux de courant secondaires (10014a, 10014b) qui sont reliés fluidiquement chacun à un canal de courant principal (10013) de la chambre d'écoulement (1001) par une entrée (10014a1, 10014b1) et une sortie (10014a2, 10014b2) et qui s'étendent chacun entre l'entrée correspondante (10014a1, 10014b1) et la sortie correspondante (10014a2, 10014b2), l'oscillation étant effectuée dans un plan d'oscillation,
dans lequel le composant fluidique comprend en outre un dispositif de séparation (2000) qui est conçu pour séparer une partie du courant de fluide oscillant, le dispositif de séparation (2000) comportant une ouverture d'entrée (20011) à travers laquelle le courant de fluide oscillant entre dans le dispositif de séparation (2000), et au moins une première ouverture de sortie (20012) et au moins une deuxième ouverture de sortie (20013), par lesquelles sort respectivement une partie du courant de fluide oscillant, un diviseur d'écoulement (20014) étant prévu entre l'au moins une première ouverture de sortie (20012) du dispositif de séparation (2000) et l'au moins une deuxième ouverture de sortie (20013) du dispositif de séparation (2000), lequel diviseur d'écoulement fait entrer le courant de fluide oscillant alternativement dans l'au moins une première et l'au moins une deuxième ouverture de sortie (20012, 20013) du dispositif de séparation (2000), le dispositif de séparation (2000) étant conçu de telle sorte que la partie du courant de fluide oscillant, qui est dirigée dans l'au moins une première ouverture de sortie (20012) du dispositif de séparation (2000), et la partie du courant de fluide oscillant, qui est dirigée dans l'au moins une deuxième ouverture de sortie (20013) du dispositif de séparation, ne sont pas à nouveau réunies en aval du diviseur d'écoulement (20014), et dans lequel l'au moins une première ouverture de sortie (20012) et l'au moins une deuxième ouverture de sortie (20013) du dispositif de séparation (2000) présentent une extension de taille différente dans le plan d'oscillation et transversalement à la direction d'écoulement du fluide.

2. Composant fluidique (112) selon la revendication 1, **caractérisé en ce que** le dispositif de séparation (2000) est conçu de telle sorte que la partie du courant de fluide qui sort de l'au moins un premier orifice de sortie (20012) du dispositif de séparation (2000) et la partie du courant de fluide qui sort de l'au moins un deuxième orifice de sortie (20013) du dispositif de séparation (2000) sont chacune dirigées le long d'un axe (R₁, R₂), les axes (R₁, R₂) divergeant dans la direction du courant de fluide.

3. Composant fluidique (112) selon la revendication 1 ou 2, **caractérisé en ce que** l'au moins un premier orifice de sortie (20012) du dispositif de séparation (2000) et l'orifice d'entrée (20011) du dispositif de séparation (2000) présentent chacun une extension dans le plan d'oscillation et transversalement à la direction du courant de fluide, l'extension de l'au moins une première ouverture de sortie (20012) du dispositif de séparation (2000) étant inférieure ou égale à 150 % de l'extension de l'ouverture d'entrée (20011) du dispositif de séparation (2000), de préférence inférieure ou égale à l'extension de l'ouverture d'entrée (20011) du dispositif de séparation (2000), en particulier de préférence inférieure ou égale à 75 % de l'extension de l'ouverture d'entrée (20011) du dispositif de séparation (2000).

4. Composant fluidique (112) selon l'une quelconque des revendications précédentes, **caractérisé en ce que** l'au moins un premier orifice de sortie (20012) du dispositif de séparation (2000) présente une aire en section transversalement à la direction du courant de fluide inférieure à celle de l'orifice d'entrée (20011) du dispositif de séparation (2000).

5. Composant fluidique (112) selon l'une quelconque des revendications précédentes, **caractérisé en ce que** le dispositif de séparation (2000) est agencé en aval de l'ouverture de sortie (10012) de la chambre d'écoulement (1001), en particulier **en ce que** l'ouverture de sortie (10012) de la chambre d'écoulement (1001) correspond à l'ouverture d'entrée (20011) du dispositif de séparation (2000).

6. Composant fluidique (112) selon l'une quelconque des revendications précédentes, **caractérisé en ce que** le diviseur d'écoulement (20014) comprend au moins une paroi incurvée qui est bombée vers l'extérieur, vue dans la direction du courant de fluide,
et/ou **en ce que** le diviseur d'écoulement (20014) et une paroi adjacente au diviseur d'écoulement et délimitant l'au moins une première ouverture de sortie (20012) du dispositif de séparation (2000) forment un angle (ξ) qui est inférieur à 95°, de préférence inférieur à 70°, en particulier de préférence inférieur à 45°.

7. Composant fluidique (112) selon l'une quelconque des revendications précédentes, **caractérisé en ce que** la chambre d'écoulement (1001) présente une extension perpendiculairement au plan d'oscillation, cette extension étant variable,
et/ou **en ce que** l'au moins une première ouverture de sortie (20012) du dispositif de séparation (2000) est variable en position, en forme et/ou en taille.

8. Composant fluidique (112) selon l'une quelconque des revendications précédentes, **caractérisé en ce que** lesdits au moins deux canaux de courant secondaires (10014a, 10014b) présentent une longueur différente, en particulier au moins un premier des au moins deux canaux de courant secondaires (10014a, 10014b) étant au moins deux fois plus long qu'un deuxième des au moins deux canaux de courant secondaires (10014a, 10014b), de préférence au moins cinq fois plus long.

9. Composant fluidique (112) selon l'une quelconque des revendications précédentes, **caractérisé en ce que** l'au moins un premier orifice de sortie (20012) du dispositif de séparation (2000) est prévu pour délivrer une partie du courant de fluide oscillant sous la forme d'un signal ultrasonore, tandis que l'au moins un deuxième orifice de sortie (20013) du dispositif de séparation (2000) est prévu pour délivrer un reste du courant de fluide,
et/ou **en ce qu'**un dispositif d'insonorisation est prévu dans la zone de l'au moins une deuxième ouverture de sortie (20013) du dispositif de séparation (2000).

10. Composant fluidique (112) selon l'une quelconque des revendications précédentes, **caractérisé en ce que** le composant fluidique (112) est conçu pour générer un signal ultrasonore (S) comportant des impulsions qui présentent un intervalle d'impulsion temporel (T) entre elles et chacune une largeur de demi-valeur (b), l'intervalle d'impulsion (T) étant supérieur ou égal à deux fois la largeur de demi-valeur (b), en particulier supérieur ou égal à dix fois la largeur de demi-valeur (b), de préférence supérieur ou égal à cent fois la largeur de demi-valeur (b).

11. Composant fluidique (112) selon l'une quelconque des revendications 1 à 7 et 9 à 10, **caractérisé en ce que** le moyen (10020) pour former une oscillation du courant de fluide comprend un dispositif (10022) destiné à fournir un courant de fluide auxiliaire et au moins un conduit d'alimentation (10021) qui est relié fluidiquement d'une part au dispositif (10022) et d'autre part à la chambre d'écoulement (1001) du composant fluidique (112) pour fournir le courant de fluide auxiliaire à la chambre d'écoulement (1001), l'au moins un conduit d'alimentation (10021) étant agencé par rapport à la chambre d'écoulement (1001) de telle sorte que le courant de fluide auxiliaire entre dans la chambre d'écoulement (1001) sous un angle différent de 0° par rapport au courant de fluide s'écoulant de l'ouverture d'entrée (10011) vers l'ouverture de sortie (10012), et **en ce que** le courant de fluide auxiliaire est prévu par le dispositif (10022) comme courant de fluide auxiliaire oscillant, de sorte que l'au moins une conduite d'alimentation (10021) amène le courant de fluide auxiliaire à la chambre d'écoulement (1001) du composant fluidique (112) de manière variable dans le temps.

12. Composant fluidique (112) selon la revendication 11, **caractérisé en ce que** le dispositif (10022) destiné à fournir un courant de fluide auxiliaire comporte un deuxième composant fluidique (112') qui comprend une chambre d'écoulement (1001') qui peut être traversée par le courant de fluide auxiliaire, qui entre dans la chambre d'écoulement (1001') par un orifice d'entrée (10011') de la chambre d'écoulement (1001') et qui sort de la chambre d'écoulement (1001') par un orifice de sortie (10012') de la chambre d'écoulement (1001'), le deuxième composant fluidique (112') comprenant au moins un moyen (10014a', 10014b') pour former une oscillation du courant de fluide auxiliaire au niveau de l'ouverture de sortie (10012), l'oscillation s'effectuant dans un plan d'oscillation, l'au moins un moyen (10014a', 10014b') pour former une oscillation du courant de fluide auxiliaire comportant en particulier un canal de courant secondaire (10014a', 10014b') qui est relié fluidiquement à un canal de courant principal (10013') de la chambre d'écoulement (1001') par une entrée (10014a1', 10014b1') et une sortie (10014a2', 10014b2'), et qui s'étend entre l'entrée (10014a1', 10014b1') et la sortie (10014a2', 10014b2'),
et/ou **en ce que** le moyen (10020) pour former une oscillation du courant de fluide comporte deux conduites d'alimentation (10021) qui sont chacune reliées fluidiquement à la chambre d'écoulement (1001) du composant fluidique (112) sur des côtés opposés de la chambre d'écoulement (1001), un deuxième diviseur d'écoulement (10023) étant prévu en particulier en aval du dispositif (10022) pour fournir un courant de fluide auxiliaire, qui dirige le courant de fluide auxiliaire oscillant sortant du dispositif (10022) alternativement dans les deux conduites d'alimentation (10021), les deux conduites d'alimentation (10021) étant en particulier traversées par le courant de fluide auxiliaire avec un décalage dans le temps.

13. Composant fluidique (112) selon l'une quelconque des revendications précédentes, **caractérisé en ce que** le dispositif de séparation (2000) comporte au moins un premier orifice de sortie (20012), au moins un deuxième orifice de sortie (20013) et au moins un troisième orifice de sortie (20015), à travers chacun desquels une partie du courant de fluide oscillant sort, un diviseur d'écoulement (20014) étant prévu entre l'au moins une première ouverture de sortie (20012) du dispositif de séparation (2000), l'au moins une deuxième ouverture de sortie (20013) du dispositif de séparation (2000) et l'au moins une troisième ouverture de sortie (20015) du dispositif de séparation (2000), qui dirige le courant de fluide oscillant alternativement dans au moins une première, deuxième et troisième ouverture de sortie (20012, 20013, 20015) du dispositif de séparation (2000), l'une des ouvertures de sortie (20012) étant située sur un axe qui s'étend sensiblement au milieu entre les déviations maximales du courant de fluide oscillant, et présente une aire en section plus petite que les autres ouvertures de sortie (20013, 20015) du dispositif de séparation (2000).

14. Dispositif (11) destiné à générer un signal ultrasonore (S), **caractérisé en ce que** le dispositif (11) comprend un composant fluidique (112) pour générer un signal ultrasonore (S) selon l'une quelconque des revendications 1 à 13 et une source de courant de fluide (111) pour fournir un courant de fluide, la source de courant de fluide (111) étant reliée fluidiquement à l'ouverture d'entrée (10011) de la chambre d'écoulement (1001) du composant fluidique (112), la source de courant de fluide (111) étant en particulier une source de courant de gaz,
ou **en ce que** le dispositif (11) comprend un composant fluidique (112) pour générer un signal ultrasonore (S) selon l'une quelconque des revendications 12 et 13, une source de courant de fluide (111) et une source de courant de fluide auxiliaire (111') pour fournir le courant de fluide et le courant de fluide auxiliaire, respectivement, la source de courant de fluide (111) étant reliée fluidiquement à l'ouverture d'entrée (10011) de la chambre d'écoulement (1001) du composant fluidique (112) et la source de courant de fluide auxiliaire (111') étant reliée à l'ouverture d'entrée (10011') de la chambre d'écoulement (1001') du dispositif (10022) pour fournir un courant de fluide auxiliaire, la source de courant de fluide (111) et la source de courant de fluide auxiliaire (111') étant en particulier chacune une source de courant de gaz.

15. Dispositif de mesure ultrasonore (1) comportant un dispositif (11) pour générer un signal ultrasonore (S), un dispositif (12) pour recevoir un signal ultrasonore (S, S'), et une unité de traitement de signaux (13) pour traiter le signal ultrasonore reçu (S, S'),
**caractérisé en ce que**
**en ce que** le dispositif (11) destiné à générer un signal ultrasonore (S) comporte un composant fluidique (112) selon l'une quelconque des revendications 1 à 13, le dispositif (12) destiné à recevoir un signal ultrasonore (S, S') étant en particulier configuré pour recevoir un signal ultrasonore (S') émis par le dispositif (11) destiné à générer un signal ultrasonore (S) et réfléchi à l'extérieur du dispositif de mesure ultrasonore, et un signal de référence, le signal de référence étant fourni par le courant de fluide sortant de l'au moins un deuxième orifice de sortie (20013) du dispositif de séparation (2000).
